# EUROPEAN PATENT SPECIFICATION

(11) **EP 4 341 642 B1**
(45) Date of publication and mention of the grant of the patent: **08.07.2026**
(21) Application number: 22730978.8
(22) Date of filing: 20.05.2022
(51) Int. Cl.: G01B 11/14

(54) **APPARATUS AND METHOD FOR MEASURING A SPACE AND / OR A FLUSHNESS AND / OR AN ANGLE OF MISALIGNMENT BETWEEN A FIRST SURFACE AND A SECOND SURFACE**
VORRICHTUNG UND VERFAHREN ZUM MESSEN EINES ABSTANDES UND/ODER EINER AUSRICHTUNG UND/ODER EINES WINKELS DER FEHLAUSRICHTUNG ZWISCHEN EINER ERSTEN OBERFLÄCHE UND EINER ZWEITEN OBERFLÄCHE
APPAREIL ET PROCÉDÉ POUR MESURER UN ESPACE ET/OU UN ALIGNEMENT ET/OU UN ANGLE DE DÉSALIGNEMENT ENTRE UNE PREMIÈRE SURFACE ET UNE SECONDE SURFACE

(30) Priority: 20.05.2021 IT 202100013196; 20.05.2021 IT 202100013208
(43) Date of publication of application: 27.03.2024
(73) Proprietor: U-Sense.It S.r.l., 60131 Ancona (IT)
(72) Inventor: CHIARIOTTI, Paolo, 60024 Filottrano (AN) (IT); GIULIETTI, Nicola, 60015 Falconara Marittima (AN) (IT); PAONE, Nicola, 60035 Jesi (AN) (IT); CASTELLINI, Paolo, 60033 Chiaravalle (AN) (IT)
(74) Representative: PGA S.p.A.
(86) International application number: PCT/IB2022/054723
(87) International publication number: WO 2022/243953

(56) References cited:
- WO-A1-2015/193711
- WO-A1-2019/167012
- CN-A- 110 530 278
- US-A- 5 416 590
- US-A- 5 999 265

## Description

### Field of the invention

The present invention relates to the field of measuring instruments and also to the field of data processing programs. **In** detail, the present invention relates to an apparatus and a method for measuring a space and/or an alignment and/or an angle of misalignment between surfaces.

### Prior Art

Various branches of the art require two or more surfaces to be coupled together. Such surfaces may have at least one of a misalignment, a gap and an angle of misalignment. Such surfaces may, for example, be the outwardly facing surfaces of adjacent and/or side-by-side panels. Particularly in the automotive industry, the use of coupled surfaces is known, which typically must have a predefined coupling angle, a space as small as possible and an optimal alignment. These coupled surfaces may belong to parts made of the same material (for example, side and door, which are both made of sheet metal) or to parts made of different materials (for example, headlight and fender). In the automotive field, optimal alignment, spacing and alignment angle values are sought in order to provide a particular aesthetic pleasantness to the vehicle body and also in order to prevent annoying aerodynamic noises that in use can be created if the sheets, especially those exposed to the air current, are significantly offset, such possible misalignments also being able to involve critical functional issues in the case of leakage of underlying seals.

The space G between two surfaces can be defined as the distance between the surfaces measured in the plane tangent to the two surfaces under examination. In other words, since the surfaces belong to two distinct parts (such distinct parts being either separate parts of the same object or parts of distinct objects), the space G is representative of the extent of the gap between the two parts. The alignment F between two surfaces may in particular be defined as a distance between two surfaces measured orthogonal to the planes tangent to the surfaces under consideration and, where the two planes are not parallel, to the plane tangent to one of the two surfaces taken as reference. The angle of misalignment α between two surfaces may be calculated as the angle between the planes tangent to the surfaces under consideration.

Measuring instruments are known which can measure the values of the gap between two surfaces, which can measure the values of the alignment between two surfaces and which can measure the values of the misalignment angle between two surfaces. Such measuring instruments typically exploit the acquisition and subsequent processing of at least one image on which a pre-defined light beam is projected. The surfaces on which space, alignment and/or misalignment angle measurements can be performed may be optically cooperative or optically non-cooperative. Optically cooperative surfaces (diffusive surfaces) allow a good scattering of the optical radiation impinging on them (behavior similar to the Lambertian diffuser) and this makes it possible to increase the value of the signal-to-noise ratio (SNR) in the acquired image thus ensuring a good quality (contrast and intensity) of the line associated to the optical radiation in the image itself. Optically non-cooperative surfaces, contrarily, typically cause decrease of the signal-to-noise ratio (SNR) value with a consequent worsening of the quality of the line associated to the optical radiation in the image. Lack of continuity in the line and/or trends with important variations in the intensity of reflected optical radiation and/or jagged representation of the line can be reported as examples of this worsenging. The surfaces on which the spacing, alignment and/or misalignment angle values are measured do not always exhibit similar optical characteristics. In some cases, it may be necessary to measure gaps, alignments and misalignment angles of two surfaces in close proximity to each other, which have significantly different optical characteristics. Accordingly, illuminating said first and second surfaces for extracting profile data often leads to obtaining images in which at least a portion, relative to one between the first and second surfaces, is severely underexposed or, conversely, leads to obtaining images in which at least a portion relative to one between the first and second surfaces is severely overexposed. This causes objective criticality and/or high uncertainty in the extraction of profile data, for example due to a significantly low signal-to-noise ratio (in the case of an underexposed image) or a saturation condition (in the case of an overexposed image).

Patent US5,999,265 describes a method for measuring spacing and alignment between adjacent, non-directly contacting parts using a triangulation system with two parallel planes of light. Patent EP2071279B1 discloses a method based on identifying the pose of an optical triangulation system with respect to a solid body whose shape is to be detected. The patent US8,274,662 discusses a laser triangulation measuring instrument, which exploits masks for generating multiple light planes, of arbitrary shape, from a single emitting source, a guiding element for centering the light plane through a hole and a device useful for positioning the instrument according to the features to be measured. Patent EP3100266B1 illustrates a triangulation system configured to measure a gap existing between the tip of a turbine tip and a turbine casing. Patent EP2423639B1 describes a triangulation-based scanning system for measuring a gap and a misalignment of two surfaces adjacent to each other. Patent US5,416,590 discloses an apparatus for measuring space and alignment between two adjacent surfaces that includes a pair of strobe lights, an optical interface, a camera, and a signal processor. The known technique therefore makes available different laser triangulation devices for space and alignment measurement, which all have the advantage of being portable (in order to allow their easy use in the production line), but at the same time exhibit criticalities that are far from negligible. In particular, the lack of devices to compensate for any incorrect position of the instrument before and/or during the measurement, as well as the poor reliability when the measurement involves optically non-cooperative surfaces, such as glass or plastic elements, negatively affect the performance of the known devices.

A considerable refinement to the state of the art is made by means of the technical solution set forth in patent application WO2019/167012A1, which relates to an apparatus for measuring a space and/or an alignment between two surfaces and a measurement process thereof. The apparatus comprises a light source that generates a light plane, a camera arranged to have the optical imaging axis inclined with respect to the optical illumination axis of the light source, a distance sensor configured to measure the distance between the apparatus and the surfaces being measured, and a controller operatively connected to the light source, the camera and the distance sensor. The controller acquires data from the distance sensor and images from the camera and commands activation of the light source only if the measurement position is recognized as the correct position and the measured distance between the apparatus and the surfaces is within a predetermined range. The space and/or alignment values are then determined on the basis of triangulation algorithms. The technical solution of patent application WO2019/167012A1, although achieving advantageous technical effects in relation to the state of the prior art, is itself not free from objective criticalities. First, the results of the measurement operations are not satisfactory when measurements are performed on adjacent parts having different optical properties (e.g., for differences in color, surface finish and material). Secondly, the triangulation algorithms used to determine the spatial and/or alignment values of the surfaces to be measured introduce a considerable computational complexity, which affects the sizing of the electronic components in particular and of the measuring apparatus in general, and which also determines a possible increase in the time required to complete the measurement operations.

Document CN110530278A describes a method for measuring alignments, particularly for the automotive industry, based on the use of multi-line structured light. A camera captures an image of the projected light. The captured image is subjected to contour segmentation. Document CN111914747A describes a method for measuring an oblique gap of a lock, wherein algorithms based on neural networks are used. Document US2010/0195116A1 describes a triangulation sensor comprising a laser light source whose intensity can be varied according to the optical characteristics of the surfaces to be measured. Document WO2015/193711A1 describes a method for calculating parameters of an object, in particular the weight of a farm animal, from the acquisition of two-dimensional digital images. The acquired digital image is subjected to a segmentation aimed at identifying pixels that share certain characteristics. The segmentation may be based on a probabilistic model and involve statistical inference between the model and the digital image.

### Proposals of the invention

The purpose of the present disclosure is to describe an apparatus and a method for measuring a space and/or an alignment and/or a misalignment angle between surfaces, as claimed in claims 1 and **11,** respectively, which enable to solve the above-described drawbacks, in particular of the drawbacks complained of in connection with the technical solution of patent application WO2019/167012A1. It is a further purpose of the present document to provide a measuring apparatus that provides reliable results, even when the surfaces subjected to the measuring operations are optically non-cooperative and/or even when the surfaces subjected to the measuring operations exhibit optical characteristics that are even significantly different from each other. It is a further purpose of the present document to provide a measuring apparatus that provides reliable results, regardless of the material from which the parts to which said surfaces belong are made, the color of said surfaces and the surface finish of said surfaces. It is a further purpose of the present disclosure to provide a measuring apparatus that is particularly compact, being able in particular to be easily handled and/or used by an operator in service at a production line, such handling and/or such use advantageously requiring the engagement of only one hand, and being able to be conveniently carried in particular in a pocket or wearable case. It is a further object of the present document to provide a measuring apparatus which is rather essential also in relation to the electronics provided for detecting the space and/or alignment from the acquired image, as well as in relation to the electronics provided for controlling the light source. It is a further purpose of the present document to provide a measuring apparatus that provides the operator with rapid feedback regarding the space and/or alignment between surfaces, so as not to cause, for example, any aggravation to the times on which the production line is regulated if the use of the invention takes place in these areas. It is a further object of the present document to provide an apparatus for measuring a space and/or an alignment and/or an alignment angle which is particularly accurate and reliable. Further purpose of the present document is to provide a measuring apparatus that can detect and/or report and/or compensate for conditions that are likely to act as sources of uncertainty in the measurement of a space and/or an alignment and/or an alignment angle. It is a further object of the present document to provide a measuring apparatus that makes it unnecessary to install expensive optical components such as lenses, filters, polarizers, or that makes it possible to install such components in smaller numbers and/or with lower intrinsic performance characteristics. It is a further object of the present disclosure to provide an apparatus for measuring a space and/or an alignment and/or an alignment angle that can generate diagnostic information.

### Figures

The invention will now be described with reference to some of its preferred and non-limiting embodiments, described with reference to the appended figures. A brief description of the figures is hereinafter provided.
Figure 1 illustrates a schematic and perspective representation of a first and non-limiting embodiment of the apparatus that is the subject of the present document.
Figure 2 illustrates a schematic and perspective embodiment of a second and non-limiting embodiment of the apparatus that is the subject of the present document.
Figure 3 illustrates a schematic view of a first surface and a second surface which are separated and misaligned from each other.

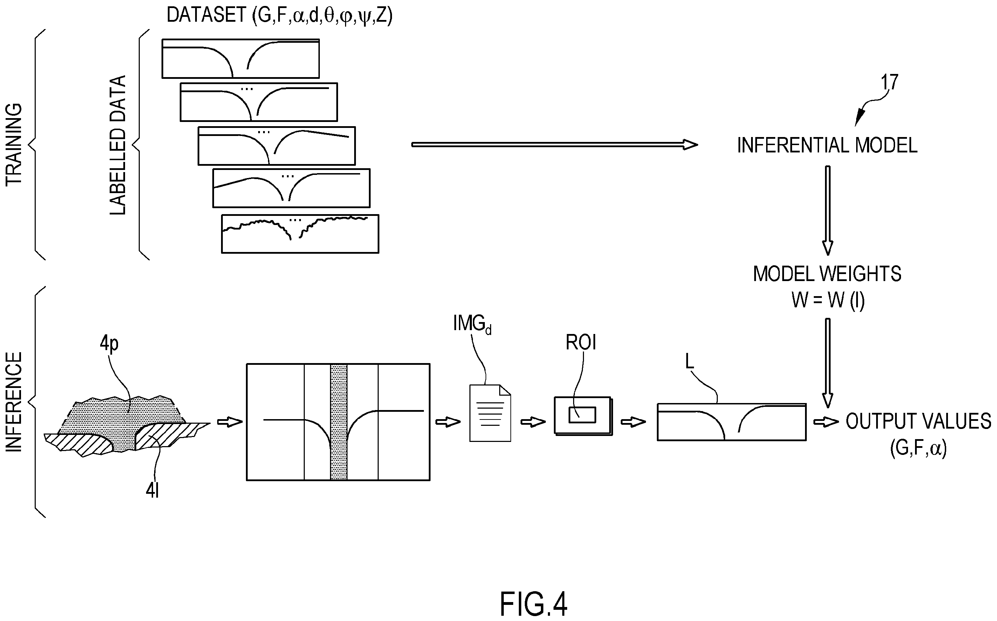

Figure 4 illustrates a schematic representation of the steps of training an inferential model and applying said inferential model to a method for measuring a space and/or an alignment and/or a misalignment angle between a first surface and a second surface.
Figure 5 illustrates a block diagram of a method for measuring a space and/or an alignment and/or a misalignment angle between a first surface and a second surface, said method making use of an inferential model.
Figure 6 illustrates a schematic view of a first surface and a second surface illuminated by an optical radiation plane.
Figures 7 to 9 illustrate possible images acquired of a first surface and a second surface after illuminating them by an optical radiation plane.
Figures 10 and 11 illustrate two conditions for measuring a gap and/or an alignment and/or a misalignment angle between a first surface and a second surface.
Figure 12 illustrates in schematic form an optimization procedure for an optical radiation profile generated on a first surface and a second surface.
Figure 13 schematically illustrates a procedure of semantic segmentation of an image, following which a first surface, a second surface and the separation zone between them are labelled.
Figure 14 illustrates in schematic form the training and classification steps within a semantic segmentation procedure.
Figure 15 illustrates in schematic form the semantic segmentation procedure according to three typical measurement conditions.
Figure 16 illustrates a block diagram of a method for measuring a space and/or an alignment and/or a misalignment angle between a first surface and a second surface, said method making use of a semantic segmentation technique.
Figures 17 to 19 illustrate three distinct apparatus placement conditions that are likely to lead to uncertainties in the measurement of a gap and/or an alignment and/or an angle of misalignment between a first surface and a second surface.

### Detailed description

In a general embodiment thereof, the present document relates to an apparatus 1 for measuring a gap ("gap") and/or an alignment ("flush") and/or an angle of misalignment between a first surface and a second surface, which in the appended Figures are identified by numerical references 2 and 3, respectively. The apparatus 1 according to the present invention comprises a data processing unit 9, which exhibits the features, combinable with each other but in any case independent of each other, of implementing (for the purposes of measuring the space and/or the alignment and/or the angle of misalignment between a first and a second surface) an inferential model and of implementing a semantic segmentation technique. The apparatus 1 described herein is in particular configured and specifically intended to allow measurement of a space and/or an alignment and/or a misalignment angle between a first and a second surface in which at least one of said surfaces is an optically cooperative or an optically non-cooperative surface.

Such first and second surfaces may for example be a first and second sheet metal of a vehicle, in particular of an automobile, or of a household appliance, in particular of an oven, or may be a sheet metal and a chassis of a vehicle, in particular of an automobile, or of a household appliance, in particular of an oven or of a refrigerator.

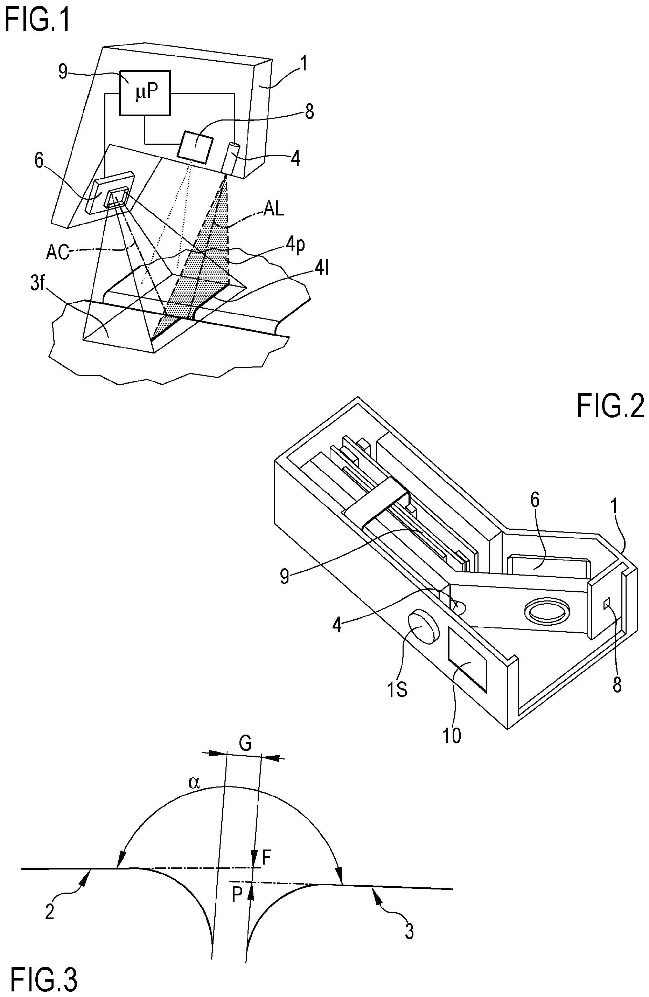

The apparatus 1 which is the subject of the present disclosure may be configured and specifically intended to be coupled to a support device which is not in motion, for example to a photo tripod or a robotic arm, thus resulting in a fixed type. Alternatively, the apparatus 1 target of the present document may comprise a casing of small dimensions such that it can be carried by an operator, advantageously by means of one hand only. Such a form of embodiment is shown in Figure 2. In a preferred but not limiting embodiment, said casing is made of a plastic material.

The apparatus that is the target of the present document first comprises an optical radiation source 4, for example a laser type source or alternatively an LED. Preferably, the optical radiation source 4 may comprise a multi-mode laser source. It should be noted, however, that this preference is due solely to economic considerations, as the optical radiation source 4 may alternatively comprise a single mode laser source.

Preferably, the source 4 is of a variable and/or drivable type, i.e., capable of emitting radiation that is variable at least in frequency and/or wavelength. The source 4 is suitable for emitting optical radiation of wavelengths belonging to the infrared or visible or ultraviolet range (such optical radiation may also be referred to as light, whether infrared or visible or ultraviolet, wherein the source 4 may be referred to as a light source). Advantageously, the source 4 is capable of emitting in the spectral range below 600 nm, even more advantageously in the spectral range between 380 nm and 420 nm. The source 4 is housed within the casing of the apparatus 1, or is attached to the casing of the apparatus 1.

The source 4 is associated with at least one lens, configured to generate an optical radiation plane (in the infrared or visible or ultraviolet range) from the optical radiation emitted by the source 4, said optical radiation plane facilitating the performance of space and/or distance and/or alignment and/or misalignment angle measurements. The lens suitable for generating said optical radiation plane may, in preferred embodiments of the invention, be a cylindrical lens or a diffractive lens.

The source 4 is configured to irradiate an optical radiation along a predefined and preferred optical propagation axis AL, the optical radiation being then transduced into the optical radiation plane by means of the interposition of suitable devices (e.g. of said lens).

In a preferred but not limiting embodiment, a diffractive optic or cylindrical lens is associated with the source 4, in particular if it is of the laser type, in order to realize the illumination of the first surface 2 and of the second surface 3 with a blade-like optical radiation, thus with an optical radiation that is substantially aligned along an axial direction. In figure 1, the reference 4p identifies the plane along which the optical radiation emitted by the source 4 is substantially propagated, which, when it reaches the first surface 2 and the second surface 3, ideally identifies a line 4l.

The apparatus 1 described herein, further comprising at least one image capturing device 6, in a form of a camera or photographic apparatus, configured to capture an image of a portion of said first surface 2 and said second surface 3, as well as of the separation zone between them, and, when said source 4 is active, an image of an optical radiation profile on said first surface 2 and said second surface 3. The image capturing device 6 is housed within the casing of the apparatus 1 or attached to the casing of the apparatus 1. The image capturing device 6 comprises a sensor, in particular a pixel array sensor, and comprises optics aligned with the sensor, in particular axially aligned with the sensor. In particular, the sensor comprises a number of pixels and/or an aspect ratio substantially corresponding to the number of pixels and/or an aspect ratio of the plurality of pixels of the file corresponding to the image data.

The image capturing device 6, in particular, is oriented with respect to the source 4 such that the image capturing device 6 captures an image of the optical radiation profile generated by the source 4, by projection of the optical radiation plane generated by the lens downstream of the source 4 onto the first and second surfaces 2, 3.

In an embodiment of the present invention, the apparatus 1 comprises a plurality of image capturing devices, each of said image capturing devices being in charge of capturing an image of a portion of said first surface 2 and of said second surface 3, as well as of the separation zone between said surfaces. When the source 4 is active, each image capturing device is further arranged to capture the image of the optical radiation profile according to a predetermined orientation, so that in particular a stereoscopic image can be obtained. The presence in the apparatus 1 of a plurality of image capturing devices is suggested especially when there are undercuts at the first surface 2 and the second surface 3.

The image capturing device 6 is configured to allow capturing an image according to a predefined optical imaging axis, identified in the appended Figures herein by reference AC.

In particular, the image capturing device 6 is configured to capture an image over a predefined shooting area, for example substantially rectangular, identified in the appended Figures by reference 3f.

A particular and non-limiting embodiment of the apparatus 1 described herein is such that the optical imaging axis AC and the optical propagation axis AL are substantially coplanar, and in particular have a reciprocal angle of inclination between 15° and 75°, preferably between 30° and 60°, even more preferably between 40° and 50°. This allows optimal measurement accuracy.

The apparatus 1 described herein further comprises a data processing unit 9. Said data processing unit 9 may, for example and not limited thereto, be of a general purpose processor type, or may be (or comprise) a dedicated processor and/or an FPGA or microcircuit configured to execute a predetermined software program that will be described in more detail below. In the following portion of the description, since the software program causes steps of executing a method of measuring a space G and/or an alignment F and/or a misalignment angle α, between a first and a second surface 2, 3, specific reference will not always be made both to the steps of the method carried out by the software program and to the specific configuration of the data processing unit 9. In fact, it is understood that, where even only one element between the configuration of the data processing unit 9, the method steps and the operations performed by means of the software program is described herein, this will have to be considered as actually performed also by the remaining two elements. Said software program is advantageously contained in a memory unit which can be accessed from the data processing unit or be contained within the data processing unit itself. The software program may be written in any known type of programming language.

Said data processing unit 9 is at least configured to receive IMGd image data from the image capturing device 6 and to generate profile data L of the first and second surfaces 2, 3 based on the IMGd image data.

Within the meaning of the present disclosure, the image data may be expressed as electronic data associated with image pixels and capable of identifying the light intensity, monochromatic or in color planes, of the image portion and may also comprise alphanumeric attributes capable of assigning a specific electronic label.

The profile data L identifies the geometric arrangement of a plurality of points of the first surface 2 and the second surface 3 and, for this reason, comprises coordinate data, in particular at least two-dimensional coordinate data. Preferably, but not limited to, said coordinate data are defined with respect to a predefined origin point fixed within the image area captured by the image capturing device 6.

Although this should not be construed in a limiting manner, the coordinate data is preferably expressed as Cartesian data. This does not preclude, in an embodiment form, the coordinate data being expressed as polar data.

The data processing unit is also configured to load an inferential model 17 and/or to process said inferential model 17.

The inferential model described herein is intended to enable the extraction from the IMGd image data, in particular from at least a portion of said IMGd image data, of at least one of:
- a value of a space G between the first surface 2 and the second surface 3,
- a value of an alignment F between the first surface 2 and the second surface 3, and
- a value of an angle α of misalignment between the first surface 2 and the second surface 3.

In particular, the inferential model is a procedure to induce the characteristics of a population from the observation of a part of it (called "sample"), usually selected by a random experiment.

Thus, the data processing unit 9 is configured to transmit and/or provide a triad G, F, α of electronic data, wherein said triad comprises:
- a first electronic data indicating the value of space G existing between the first surface 2 and the second surface 3,
- a second electronic datum indicative of the alignment value F of the first surface 2 with respect to the second surface 3, and
- a third electronic datum indicative of the value of the misalignment angle a between the first surface 2 and the second surface 3.

Preferably but not limited to, the G, F, a, triplet of electronic data, is a triplet of alphanumeric or numeric values.

In a non-limiting embodiment, said triad of data is made explicit on a screen 10 of the apparatus 1 or on a screen external to the casing of the apparatus 1, but in any case operatively connected to the apparatus 1.

Figure 3 clearly illustrates a view of a first surface 2 and a second surface 3 which are misaligned with each other. In particular, figure 3 highlights:
- the space G, or interstice, between the first surface 2 and the second surface 3, i.e. the distance between the surfaces measured in the plane tangent to the surfaces,
- the alignment F between the first surface 2 and the second surface 3, i.e. the distance between the first surface 2 and the second surface 3 measured orthogonal to the plane tangent to the surfaces,
- the angle of misalignment a between the first surface 2 and the second surface 3, i.e. the angle between the planes tangent to the surfaces.

In particular, the data processing unit is configured and specifically programmed to provide the profile data L of the first surface 2 and the second surface 3 to the inferential model 17, so that one or more of the aforementioned values may be derived from the processing of said inferential model 17.

In particular, the inferential model 17 described herein is an inferential model weighted by means of a plurality of weights. The weights referred to herein are contained in a weight database W, which in one embodiment may be physically contained within the apparatus 1 or which, in an alternative embodiment, may be operatively accessed from the data processing unit 9 of the apparatus 1 (in which case the weight database W may also be at a remote location relative to the apparatus 1).

For the purposes of the present document, "operationally accessed" is to be understood as electronically accessed, preferably but not limited to a wireless type connection. Thus, in one form of embodiment, the apparatus 1 described herein may be configured to operate in a distributed computing environment, wherein the weight database W is operatively contained in a server remotely accessed by the apparatus 1 described herein.

The weight data W are obtained previously by a training step of the inferential model which is described below.

In order to enable proper operation of the inferential model, a training step comprises training the inferential model by means of a plurality of synthesized profiles reproducing known working conditions ("labelled data") of space G, alignment F and misalignment angle a, and, preferably, working distance d between the apparatus 1 described herein and a first surface and a second target surface. Advantageously, the training of the inferential model occurs as a function of relative orientation conditions between the apparatus 1 described herein and the first surface and the second target surface for training. In an embodiment form, the training step takes into account measurement noise on the profile of the first surface and the second target surface for training. Since the training is performed on the basis of synthesized profiles, it is indeed possible to simulate the presence of noise on the profile.

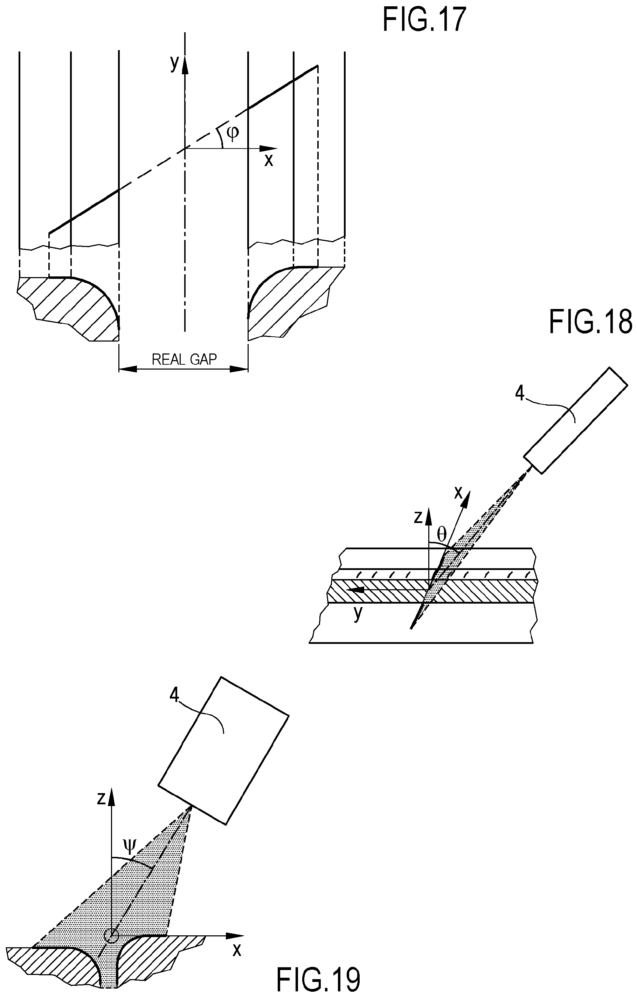

It is to be noted that the plurality of synthesized profiles comprises or is associated with a plurality of data, in particular with a n-uple of data which, in a non-limiting form of embodiment comprises, in addition to the aforementioned triad of electronic data, one or more of the following additional electronic data:
- A given electronic working distance d between the apparatus 1 and the first surface 2 and the second surface 3 (in particular a working distance d between the apparatus 1 the surface closest to the apparatus 1),
- an electronic datum φ indicative of the increase of the measured space value G, function of the misalignment F between the first surface 2 and the second surface 3 and source of greater uncertainty associated to the measurement (see the representation produced in figure 17),
- an electronic datum θ that is indicative of a reduction in an amount of optical radiation reaching the image capturing device 6 due to the specific cooperative nature of the first surface 2 and/or the second surface 3, which causes a reduction in the signal-to-noise ratio in the representation of the geometry of the surfaces (see the embodiment produced in Figure 18),
- an electronic datum Ψ indicative of a measure of reduction in the depth of penetration of optical radiation into the cavity defined between the first surface 2 and the second surface 3, resulting in a decrease in the quality of the information relating to the geometry of the first surface 2 and the second surface 3 (see the embodiment produced in Figure 18),
- an electronic data element Z representative of the level of optical co-operation of the measured surfaces, i.e. the first surface 2 and/or the second surface 3.

When creating the synthesized profiles, it is then possible to simulate such improper placements of apparatus 1, so as to predict and compensate for their effect under real measurement conditions.

Training the inferential model 17 allows us to extract weights W as a function of profile data L, thus allowing us to create a mapping that associates the profiles themselves in image space with values of G-space, misalignment F and misalignment angle α in dimensional units.

Although various types of techniques may be used to electronically generate synthetic profiles aimed at training the inferential model 17, in a preferred but not limiting embodiment such synthetic profiles are generated through optical triangulation simulation software programs and/or via mechanical CAD.

The synthesized profiles thus obtained aim to reproduce altered profile conditions to which, however, are associated correct values of space, misalignment and angle of misalignment, thus simulating and compensating (in particular attenuating or eliminating) biases and dispersions related to the uncertainties of the measurement systems in their real and not ideal operation.

The Applicant observes that in a preferred but not limiting form of embodiment, the aforementioned synthesized profiles are usable when there is a correspondence, in particular geometrically, between the actual optical configurations of the apparatus 1 described herein and those simulated in the software for the training phase of the inferential model 17.

The configurations adopted in the training phase advantageously take into account constructional features of the optical system with which the apparatus 1 is made, such as for example and not limited to the distance between the optical center of the image capturing device 6 and the optical propagation axis AL of the optical radiation, is of a type related to the optical construction of the image capturing device 6, for example and not limited to the focal length and/or the magnification factor of the lens that is supported by the image capturing device 6, and/or the shape or size of the sensor of the image capturing device 6, the size of its pixels and/or the shape factor of its pixels. Further, the configurations adopted in the training step advantageously take into account usage characteristics. Such usage characteristics may relate to the interaction between the optical system and the operator in the operation phase, in order to train the system to possible non-optimal positioning and/or orientation and/or spacing (i.e. possible pose variations) of the apparatus 1. In addition or alternatively, such operating characteristics may relate to the interaction between the apparatus 1 and the surfaces being measured (e.g. being representative of more or less optically cooperative surfaces). Additionally or alternatively, such use characteristics may further relate to the interaction between the apparatus 1 and the environment in which the measurement is made and which may result in the occurrence of optical noise.

With this approach, it is possible to increase the versatility of the apparatus 1 and it is also possible to realize advancements of the technique known in the context of triangulation systems for measuring geometric relationships between adjacent parts.

The data processing unit 9 (which, as noted herein, performs the inferential model 17 in accordance with the weight data W and in accordance with the profile data L of the first and second surfaces 2, 3), in a preferred but not limited to embodiment, may be configured to extract a region of interest ROI based on the image data IMGd. Extracting the ROI region of interest from the IMGd image data is equivalent to selecting a portion or sub-portion of the IMGd image data, namely to perform the inferential model 17 mentioned herein.

In particular, the profile data L of the first surface 2 and the second surface 3 are generated based on a portion of the image data IMGd, in particular a portion of the image data IMGd corresponding to the region of interest ROI. The ROI region of interest corresponds to a subset of pixels with respect to the overall pixels forming part of the image data. Preferably, but not limited to, the apparatus 1 object of the present disclosure may comprise at least one distance sensor 8 configured to detect, in the absence of contact, the distance linearly present between the apparatus 1, in particular between the image capturing device 6, and a surface located in proximity to the apparatus 1 and in particular in proximity to the image capturing device 6.

The distance sensor 8 may employ one or more of distance measurement technologies by optical means, or by inductive means, or by capacitive means, or by magnetic means, or by ultrasonic means.

Additionally, the apparatus 1 object of the present document may comprise an inertial sensor. Such an inertial sensor, which is operatively and preferably electrically connected to the data processing unit 9, is configured to detect a state of motion of the apparatus 1 and/or a spatial orientation of the apparatus 1. The Applicant notes that different types of inertial sensor can be applied in principle, but preferably said inertial sensor comprises an accelerometer and/or a gyroscope.

Preferably, but not limitedly, the data processing unit 9 is configured to enable activation of the optical radiation source 4 depending on the detection provided by the distance sensor 8 and/or the inertial sensor. Significantly, activation of the source 4 may be conditioned upon:
- A detection of the distance of the apparatus 1 by means of the distance sensor 8, such activation being in particular inhibited in case the detected distance is not within a predetermined range, and/or
- A detection of the orientation of the apparatus 1 by means of the inertial sensor, such activation being in particular inhibited in case the detected orientation is not within a predetermined range, and/or
- a detection of the state of motion of the apparatus 1 by means of the inertial sensor, such activation being in particular inhibited in the case in which the apparatus 1 is not considered to be in a stationary state.

The enabling of the activation of the source 4 may be performed by an enable command signal upon reception of a power signal of the same source 4. This selective control step for enabling the activation of the source 4 advantageously allows to perform measurements of space and/or alignment and/or misalignment angle between the first surface 2 and the second surface 3, only when said first surface 2 and second surface 3 are in certain positional relationships with respect to the apparatus 1. In particular, this selective control step makes it possible to provide the operator with measurements of space and/or alignment and/or angle of misalignment between the first surface 2 and the second surface 3 only when said first surface 2 and second surface 3 are in predetermined positional relationships.

Therefore, this selective control step allows the execution of the measurement in a more precise way, avoiding that the measurement of the space and/or the alignment and/or the misalignment angle between the first surface 2 and the second surface 3 can be carried out in conditions such that the result of said measurement could be strongly affected by an incorrect positional relationship of the surfaces 2, 3 with respect to the apparatus itself, for example because they are too far apart.

In a preferred, but not limiting, form of embodiment, the data processing unit 9 described herein may also be further configured to derive, from the detection of the distance sensor 8 and/or from the detection of the inertial sensor, at least one information having potential diagnostic relevance, such as, for example, the occurrence of a fall and/or a bump of the apparatus 1 or of a specific component of the apparatus 1. In particular, the data processing unit 9 may be configured to generate information of potential diagnostic relevance by comparing sequences of inertial signal acquisitions with predefined sequences associated with the occurrence of events such as falls and/or impacts of the apparatus 1. This ability of the data processing unit 9 to generate information of potential diagnostic relevance (advantageously then stored by means of storage in a non-volatile memory unit), starting in particular from the inertial sensor detection, represents in itself an invention. Additionally, the data processing unit 9 can be configured to determine the storage of the information of potential diagnostic relevance, so that it can be made available on demand.

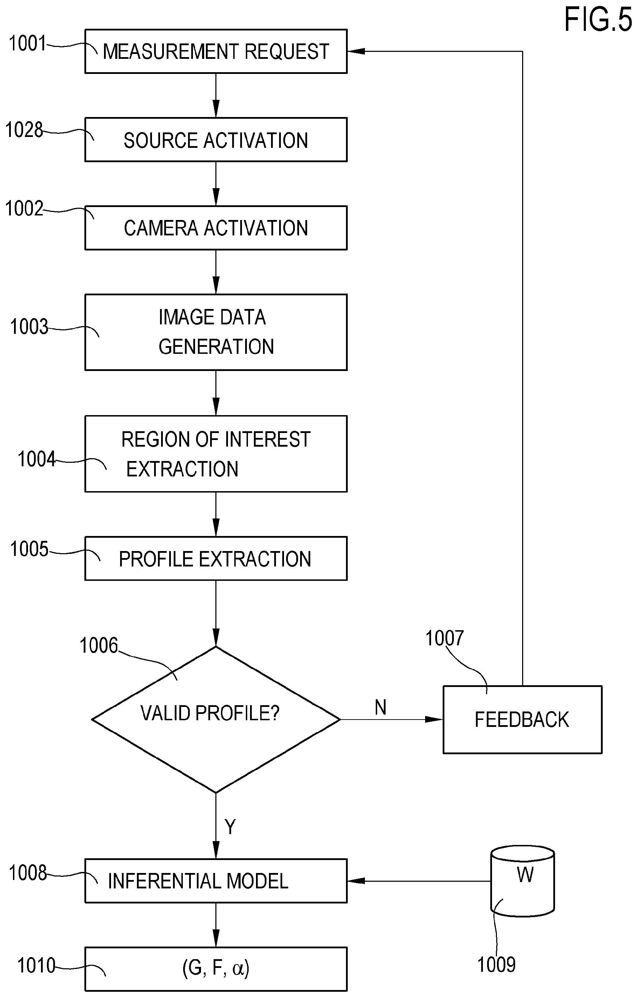

In figure 2, it is further observed that the apparatus 1 may comprise a button 1s configured to initiate a step of measuring the space and/or the alignment and/or the misalignment angle between the first surface and the second surface, said button 1s being operatively, in particular electrically, and connected with the data processing unit 9. The initiation of the measurement is schematically identified by block 1001 of figure 5, which illustrates a block diagram of a preferred embodiment of the measurement method which is also target of the present document and which is better described in the following.

In a method for measuring a space and/or an alignment and/or an angle of misalignment between a first surface 2 and a second surface 3, the generation of an optical radiation profile at said first surface 2 and said second surface 3 due to the incidence of an optical radiation plane (the optical radiation being possibly in the infrared or visible or ultraviolet domain) on said first surface 2 and said second surface 3, said profile generation being determined by an activation step of a source 4 of optical radiation, in particular of a source of laser light is contemplated. See block 1028 in figure 5.

The Applicant notes that the execution of the activation step of the source 4 may be subject to the occurrence of predetermined events. In particular, the step of activating the source 4 follows a control step by means of the data processing unit 9, which in accordance with the occurrence of certain conditions, enables the emission of optical radiation from the source 4. In a preferred embodiment of the method described herein, the step of activating the source 4 is followed by a step of verifying an existing distance between the apparatus 1 and the surfaces 2, 3 (in particular by means of the distance sensor 8 operatively connected to the data processing unit 9) and/or a step of verifying an existing orientation between the apparatus 1 and the surfaces 2, 3 (in particular by means of the inertial sensor operatively connected to the data processing unit 9) and/or a step of verifying a substantial stationarity of the apparatus 1 (in particular by means of the inertial sensor operatively connected to the data processing unit 9).

The method also comprises a step of activating a camera, or more generally an image capturing device 6, the characteristics of which have been described above.

In the step of activating the image capturing device 6 shown at block 1002 in figure 5, the at least one image capturing device 6 is activated for the purpose of capturing an image of an optical radiation profile on the first surface 2 and the second surface 3, in particular capturing an image of an optical radiation profile obtained by projection onto the first surface 2 and the second surface 3 of the optical radiation plane generated from the source 4. Therefore, from the activation step (block 1002, figure 5) of the image capturing device 6 results a generation (block 1003, figure 5) of image data IMGd by means of the image capturing device 6. The step of activating the source 4, in an embodiment, precedes the step of activating the image capturing device 6. Alternatively, in a further form of embodiment, the step of activating the source 4 follows the step of activating the image capturing device 6 (i.e., the block 1002 in the block diagram shown in Figure 5 may precede the block 1028). In any case, the generation of the image data IMGd by means of the image capturing device 6, identified by block 1003 in figure 5, follows the activation of the source 4.

The method also described herein includes an operational connection step between the image capturing device 6 and the data processing unit 9, this enabling the data processing unit 9 to receive IMGd image data from the image capturing device 6.

The method according to the present invention may thus comprise (see block 1004) a step of extracting an ROI region of interest within the image captured by the image capturing device 6. Advantageously, such a step makes use of an image segmentation technique, in particular a semantic segmentation technique. The step of extracting the ROI region of interest is evidently functional for contrasting uncertainties in the measurement. Nevertheless, it is to be considered an optional step of the method according to the present invention.

The method described herein comprises (block 1005, Figure 5) a step of generating profile data L of the first and second surfaces 2, 3 based on the image data IMGd or (e.g. if the step of extracting a region of interest ROI has been previously performed) based on part of the image data IMGd. The Applicant notes that the expression "at least part of the image data IMGd" is used herein since in one embodiment all of the image data, thus the entire image, is used for the generation of the profile L while, in an alternative embodiment, only part of said image data IMGd, in particular the part relating to the previously mentioned ROI region of interest, is used. This phase corresponds to the extraction of the ROI region of interest identified by block 1004 of figure 5 and temporally and logically precedes the generation of the profile data L, and therefore the extraction of the profile overall realized by the first surface 2 and the second surface 3. In the generating step, the profile data L of the first surface 2 and the second surface 2, 3 may therefore be generated based on a portion of the image data IMGd corresponding to the ROI region of interest. The method disclosed herein further comprises a loading and/or electronic processing step (block 1008, Figure 5) of an inferential model 17, wherein the profile data L of the first surface and the second surface 2, 3 are provided as input to the inferential model 17. The method of the present disclosure further comprises a determination of a value of a space G and/or an alignment F and/or a misalignment angle α between the first surface 2 and the second surface 3 from the profile data L based on the inferential model 17.

The application of the inferential model (block 1008, Figure 5) is advantageously conditional on the extraction of a valid profile (block 1006, Figure 5). So, not all profiles (and therefore profile data L) are to be considered valid for the application of the inferential model. If the profile of the first surface 2 and/or the profile of the second surface 3 are not considered valid, the method of the present disclosure advantageously comprises generating feedback (block 1007, Figure 5) triggering a new measurement request (block 1001, Figure 5). The feedback referred to in block 1007 may comprise an information displayed on the screen 10 (by which the operator is promptly made aware of the impossibility of successfully concluding the measurement operation) and/or made explicit by means of an appropriate acoustic beacon.

The data processing unit 9, in use, accesses the weight data base W for the inferential model 17 (for said weight data base W see reference numeral 1009 in figure 5), the weight data W having been notably derived by training the inferential model 17. A step of executing the inferential model 17 is therefore performed, depending on the weight data W and the profile data L of the first surface 2 and the second surface 3.

In a preferred and non-limiting embodiment of the method described herein, there is a determination step which specifically comprises an electronic calculation (block 1010, Figure 5) of the value of the space G and/or the alignment F and/or the misalignment angle α between the two surfaces 2, 3 as a function of the execution of the inferential model 17 and based on the weight data W.

Returning again to the apparatus 1, it is noted that, in an embodiment, the apparatus 1 may comprise a filter, operatively applied to the image capturing device 6, for example and not limited in substantial correspondence to the sensor of the image capturing device. In a non-limiting form of embodiment, such a filter may be, for example, a band pass filter designed and specifically configured to allow optical radiation centered on a predetermined wavelength band corresponding to an emission wavelength band of the source 4 to pass through, thereby filtering out those optical radiations not specific to the emission band of the source 4. In a non-limiting form of embodiment, such a filter may for example be a polarizing filter designed and specifically configured to allow optical radiation with polarization concordant with the polarization of the optical radiation source 4 to pass through. In a non-limiting form of embodiment, such filtering action may be achieved as a combination of a band pass filter and a polarizing filter. The use of the filter, for example in any of the above-mentioned embodiments, advantageously allows for a reduction in the measurement noise of the gap and/or alignment and/or misalignment angle between the two surfaces 2, 3.

Applicant notes that, however, the presence of the filter is purely optional, and is all the more so observed by the use of the inferential model 17, which allows to reduce the need for a filter.

Where the filter is absent, a significant reduction in the cost of the apparatus may be obtained, in particular observed that the filter may significantly affect the overall cost of the apparatus 1. Therefore, it is understood that the use of the inferential model 17 does not determine advantageous effects only in relation to a considerable lightening of the computational burdens borne by the data processing unit 9 (which can therefore be made more compact and essential), but also in relation to the optimization of the structure of the apparatus 1, making in particular no longer necessary the use of expensive optical devices with filter function.

The present document also relates to a specific computer program, which in use is executed by the data processing unit of apparatus 1.

The computer program is stored on a storage medium operationally accessible to the data processing unit. For example, and not limited to, such storage medium comprises, or is, a flash memory electrically connected to the data processing unit.

The computer program comprises software code portions, suitable for execution by the data processing unit, and such software code portions cause, when executed, firstly the activation of the source 4 for generating the radiation profile on the first surface 2 and the second surface 3. The software code portions therefore cause the activation of the optical radiation source 4 (in the infrared or visible or ultraviolet domain), the source 4 being in particular a laser light source. From the activation of the source 4 derives, given the prediction of the lens (cylindrical or diffractive) the generation of an optical radiation plane.

In a non-limiting form of embodiment, the activation of the source 4 occurs following the switching of a power switch of the apparatus 1 (such switching being obtained, for example, by means of the pressing of the start button 1s, then following a logic of a substantially automated type which allows to reduce the effort required to the operator).

The software code portions also cause an activation (block 1002) of the at least one image capturing device 6, in particular of the at least one camera, having an optical imaging axis AC inclined with respect to the optical propagation axis AL.

Such software code portions, following activation of the image capturing device 6 and when the source 4 has been activated, cause an image of an optical radiation profile to be captured on the first surface 2 and the second surface 3 by the image capturing device 6.

In a preferred but not limiting embodiment, the image capturing device is configured in particular to capture an image of an optical radiation profile obtained by projection onto the first surface 2 and second surface 3 of the optical radiation plane generated by the source 4. A generation 1003 of image data IMGd by means of the image capturing device 6 results from the activation step 1002 of the image capturing device 6, in particular from the capture of the image performed therein.

The software code portions are thus intended to cause a data transmission step to be performed between the image capturing device 6 and the data processing unit 9, comprising transmitting the image data IMGd from the image capturing device 6 to the data processing unit 9.

In particular, said software code portions cause a calculation of profile data L of the first surface 2 and the second surface 3 to be performed based on at least part of the image data IMGd, and also cause a loading and/or electronic processing of an inferential model 17 to be performed. In particular, profile data L of the first surface 2 and the second surface 3 are provided as input to the inferential model 17.

Through the above-described steps, the data processing unit 9, by means of the executed software code portions, electronically determines a value of a space G and/or an alignment F and/or a misalignment angle α between the first surface 2 and the second surface 3 from the profile data L based on the inferential model 17.

Although this should not be construed in a limiting manner, the computer program comprises portions of software code that, when executed, cause electronic access to a weight data base W for the inferential model 17. Such weight data W is derived by training the inferential model 17.

The electronic access performed by the software code portions is an access to a database that is preferably, but not limited to, directly accessible within the apparatus 1. Alternatively, the aforementioned electronic access comprises establishing a remote connection to a database of a computer or memory remotely located relative to apparatus 1, and operatively, optionally electrically, accessed by data processing unit 9. In particular, in a preferred, but not limiting, embodiment, the software code portions cause the establishment and/or temporary maintenance of a wireless logical connection for retrieving weight data W.

In particular, the execution of the inferential model 17 is performed as a function of the weight data W and the profile data L of the first surface 2 and the second surface 3.

The electronic determination performed by the above software code portions comprises an electronic calculation of the value of the space G and/or the alignment F and/or the misalignment angle α between the two surfaces 2, 3 as a function of the execution of the inferential model 17 based on the weight data W.

Therefore, a specific embodiment of the computer program causes an electronic generation of the profile data L of the first surface 2 and the second surface 3 based on a portion of the image data IMGd corresponding to the ROI region of interest.

In an embodiment, the computer program comprises portions of software code that, when executed, cause the execution of a training routine, wherein a plurality of synthesized profiles reproducing known conditions is provided as input to said inferential model 17. The Applicant observes that said training routine is not executed during normal measurement functionality of the apparatus 1. Advantageously, the computer program provides for execution of the training routine at a remote location relative to the apparatus 1, in particular the remote location being at the level of a cloud. Advantageously, the computer program comprises executing the training routine at a device remote from the apparatus 1, in particular the remote device comprising a remote work station. The aforementioned remote work station and/or the aforementioned use of a remote device allow for the benefit of having higher performance characteristics, with the consequence of not being forced to oversize the data processing unit 9 of the apparatus 1 to cope with the computational capabilities required for the training routine.

In particular, the training routine involves the extraction of W-weight data as a function of the synthesized profiles.

The computer program includes portions of software code which, when executed, cause an optical radiation filtering step to be performed by means of a filter, preferably but not limited to enabling hardware type filtering means, said hardware type filtering means being configured to allow, for example, the passage of optical radiation centered on a predetermined wavelength band corresponding to an emission wavelength band of the light source 4 or even optical radiation polarized in a manner complying with the polarization of the optical radiation emitted by the light source 4 or even to a combination of said filters.

At the conclusion of the measurement process, the software code portions cause calculation of a triplet G, F, α of electronic data, wherein the triplet G, F, α comprises:
- a first electronic datum indicative of the value of space G between the first surface 2 and the second surface 3,
- a second electronic datum indicative of the alignment value F of the first surface 2 with respect to the second surface 3, and
- a third electronic data element indicative of the value of the misalignment angle α between the first surface 2 and the second surface 3.

The electronic data G, F, α of the triad, once determined by means of the inferential model 17, may be made explicit to the operator by display on the screen 10. Alternatively or in addition to the display of the electronic data of space G and/or alignment F and/or misalignment angle α, information about compliance (or non-compliance) of said electronic data with predefined requirements may be made explicit. Further, there may be an operational link between the data processing unit 9 and a central controller of a production line, such that, for example, in the event of non-compliance, the central controller may command additional operations to be performed to remove such non-compliance.

A particular and non-limiting embodiment of the apparatus 1 for measuring a space and/or an alignment and/or a misalignment angle between a first surface 2 and a second surface 3 exploits a segmentation technique, in particular a semantic segmentation.

The data processing unit 9 is configured to perform, by processing at least part of said preliminary image data IMGd,p, a segmentation of the image captured by the image capturing device 6.

The Applicant points out that the segmentation referred to herein is a semantic segmentation which contemplates an electronic identification of a separation zone between the first surface 2 and the second surface 3, and that such electronic identification enables an electronic distinction between the first surface 2 and the second surface 3 within the image to be obtained. In an embodiment, the semantic segmentation is performed using neural networks.

In particular, the semantic segmentation described herein exploits a deep learning algorithm to associate each pixel with an electronic label, or category, and is used herein to recognize and/or classify and/or distinguish pixels belonging to different categories. For the purposes of the present invention, "categories" is defined as the pixel belonging to the first surface 2 or to the second surface 3 or to a space G interposed between the first surface 2 and the second surface 3.

The semantic segmentation mentioned herein is intended to allow for electronically computing, in accordance with precisely such segmentation, a first feature and a second feature associated respectively with properties of the first surface 2 and properties of the second surface 3 inferred through the preliminary image data IMGd,p.

The first characteristic and the second characteristic comprise at least one variable characteristic of an optical radiation such as luminous intensity, wavelength, polarization, frequency of luminous intensity variation, power, waveform, waveform of luminous intensity variation, and irradiation time. The determination of the first characteristic and the second characteristic is carried out from property data used to describe the specific type of surfaces 2, 3 on which the optical radiation affects, in order to allow to optimize the identification of the space and/or the alignment and/or the angle of misalignment existing between the first and the second surfaces 2, 3 independently of their shape, their finish, their colour and their material.

The data processing unit 9 is configured to then activate the source 4 such that the source 4 emits optical radiation having the first characteristic and, therefore, to receive from the image capturing device 6 first sequential image data IMGd,1 corresponding to the optical radiation having the first characteristic.

The data processing unit 9 is further configured to reactivate the light source 4 such that it emits optical radiation having the second characteristic, and is thus configured to receive from the image capturing device 6 second sequential image data IMGd,2 corresponding to the optical radiation having the second characteristic.

In one embodiment of the present invention, the power supply to the source is provided by a square wave control signal, preferably but not limited to a TTL type control signal. The use of a square wave signal should not be understood in a limiting manner, as it may be conveniently adapted according to the specific type of source 4 used in the apparatus 1.

More specifically, the Applicant observes that, in a specific embodiment, the first characteristic and the second characteristic determine the emission of an optical radiation with a first intensity and with a second higher intensity different from the first one, according to on-off type driving in the case of TTL logic, in which the intensity of the optical radiation during the time intervals in which it is emitted is constant.

In a preferred but not limiting embodiment, the driving frequency of the optical radiation emitted by the light source 4 for illuminating the first surface 2 and/or the second surface 3 is not constant, but varies over time following a predefined frequency variation law.

The use of TTL control signals advantageously makes it easy and operationally safe to protocol the transmission of drive signals from the data processing unit 9 to the source 4. This is particularly useful since the apparatus 1 described herein can be realized with components intended for the industrial sector, where TTL-type signals are employed as standard.

TTL (transistor-transistor-logic) driving signals carry binary information and are characterized by a first "high" level and a second "low" level. The "low" level can be a voltage substantially close to zero (e.g. between 0V and 0.8V), such as to determine a substantial lack of emission of optical radiation when the "low" level driving signal is fed to the source 4, or it can be a negative voltage (e.g. equal to -12V). Conversely, the "high" level may be a substantially non-zero voltage (e.g., 3.3V or 5V) such as to result in substantial switching on of the light source 4.

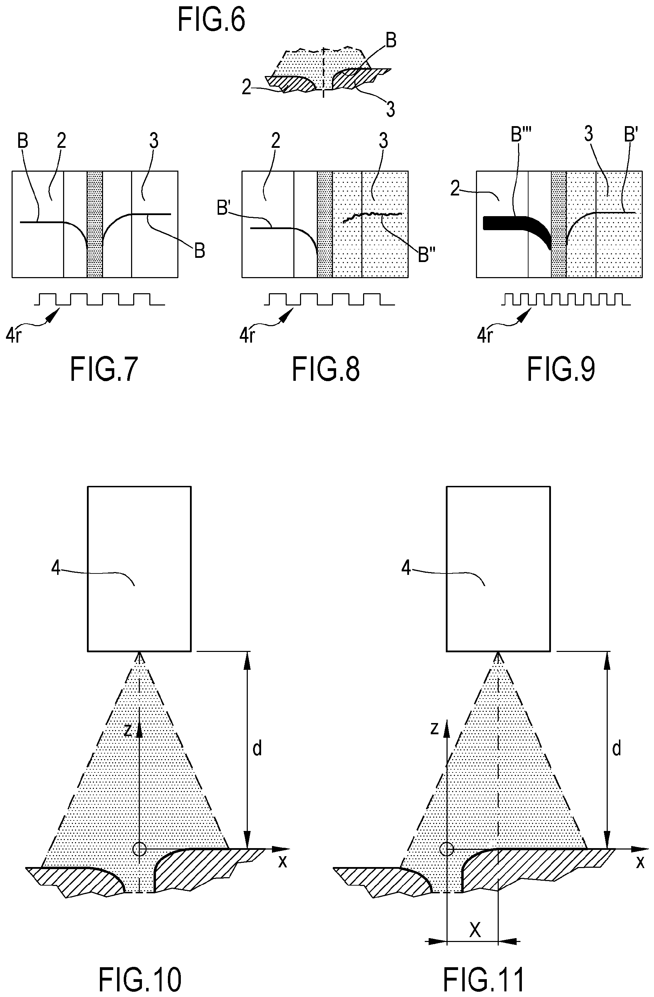

Figure 6 shows the generation on the first surface 2 and the second surface 3, of an optical radiation profile obtained as a result of the incidence of the optical radiation plane generated by the source 4 of the apparatus 1 on the first surface 2 and the second surface 3. Figure 7 identifies an optimal measurement condition, which is found when the first surface 2 and the second surface 3 referred to in Figure 6 have the same optical properties. In such a condition, it is appropriate to use the same level of optical radiation intensity obtained, by way of example and not limitation, by driving with low frequency TTL type signals (identified by means of the reference 4r), the light source 4. This allows to obtain a well defined optical radiation profile B with high signal to noise ratio (SNR). It is different in the case of the schematic representation of Figure 8, which shows instead a measurement condition in which the part of the second surface 3 adjacent to the first surface 2, i.e., a proximal portion of the second surface 3, presents different optical properties with respect to those of the first surface 2 and such as to generate a partially incomplete and noisy optical radiation profile (reference B" in Figure 8) in the case in which a low-intensity light line is incident on it. It is natural that, in such a condition, the measurement of the space G and of the alignment F, based on the analysis of the optical radiation profile, is compromised.

Figure 9, on the other hand, illustrates a measurement condition in which the intensity of the light line has been increased in order to allow obtaining a continuous profile on the second surface 3. Such an increase in intensity may be obtained, by way of example, by increasing the frequency of the TTL signal driving the source 4 (signal 4r). The increase in intensity of the optical radiation, however, generates a saturation of the optical radiation profile B" affecting the first surface 2. This saturation phenomenon is related to the optical properties of the first surface 2, which are profoundly different from those of the second surface 3. Consequently, a measurement of the space G and/or the alignment F and/or the misalignment angle α between the first surface and the second surface 2, 3 based on the analysis of the optical radiation profile is highly compromised. By using two separate optical radiation characteristics for the first and second surfaces 2, 3, the above described drawbacks can be avoided. Therefore, the data processing unit 9 is configured to perform a recombination step of the images obtained from the illumination of the first surface 2 and the second surface 3 illuminated by two optical radiation characteristics different from each other.

The data processing unit 9 is further configured to generate profile data L of the first surface 2 and the second surface 3 based on at least part of the first sequential image data IMGd,1 and at least part of the second sequential image data IMGd,2. The Applicant notes that the expression "at least part" is used herein because in a preferred, non-limiting configuration of use, only a sub-part of the image (and thus image data) corresponding to a region of ROI interest could be selected to perform the generation of the profile data L. Such steps of recombining between the images and subsequently generating profile data L may likewise, in a preferred embodiment, be replaced by a step of extracting profile data of the first surface 2 and the second surface 3 based on at least part of the first sequential image data IMGd,1 and at least part of the second sequential image data IMGd,2 and subsequently recombining only the profile data, so as to reduce the computational burden on the data processing unit 9.

Thus, the present invention provides a wide flexibility in obtaining recombined profile data, as the same may be obtained by first performing a recombination between images and then an extraction of profile data from a recombined image, or alternatively by first performing a preliminary profile data extraction from images and then a recombination between the individually extracted profile data.

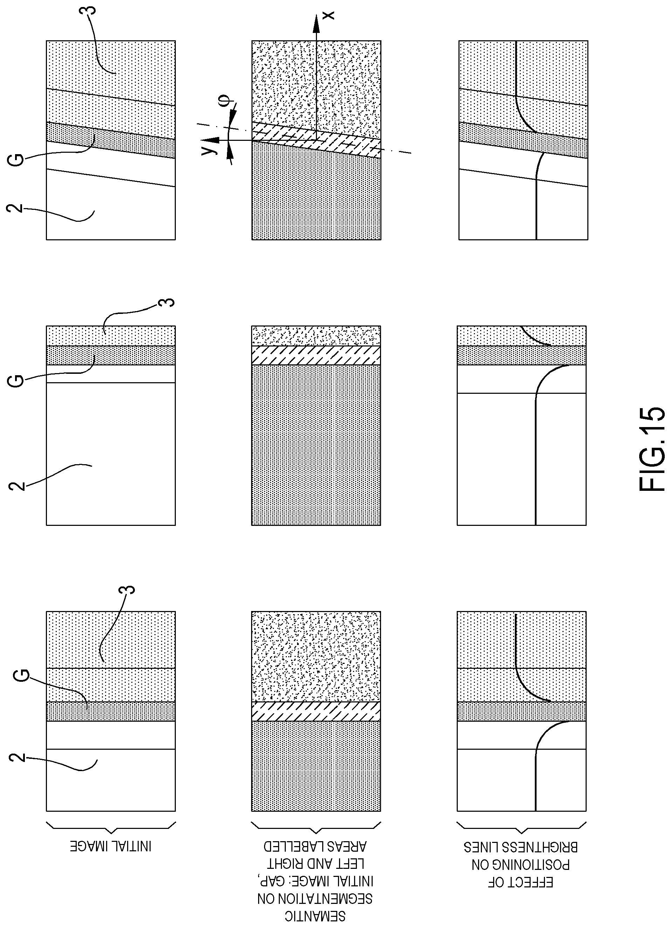

In particular, Figure 10 and Figure 11 illustrate two conditions for measuring a space and/or an alignment and/or a misalignment angle between the first surface 2 and the second surface 3. In particular, figure 11 illustrates some sources of uncertainty in the measurement of the space G and the alignment F between a first and a second surface 2, 3 adjacent to each other, wherein the measurement uncertainties, mitigated by means of the described apparatus and method, are related to misplacements of the measurement system. The condition illustrated in figure 10 is a preferred measurement condition, wherein the optical radiation plane is positioned substantially at half of the space G existing between the first surface 2 and the second surface 3. The condition illustrated in figure 11 is a non-preferred measurement condition, in which the optical radiation plane is misaligned with respect to the space G, this being able to result in an alteration of the measurements of at least the space G and/or the alignment F between the first surface 2 and the second surface 3. The misalignment with respect to the mid-space G is identified by the dimension X and results, if greater than a certain threshold, in an inability to determine valid profile data L of the first surface 2 and the second surface 3 due to incomplete display of the optical radiation profile. If, on the contrary, the optical radiation plane is offset with respect to an ideal straight line orthogonal to the first and second surfaces 2, 3, an angle φ is determined with respect to this last straight line, which determines an undue increase of the measured space value G. Such angle is also visible in figure 15 and in figure 17.

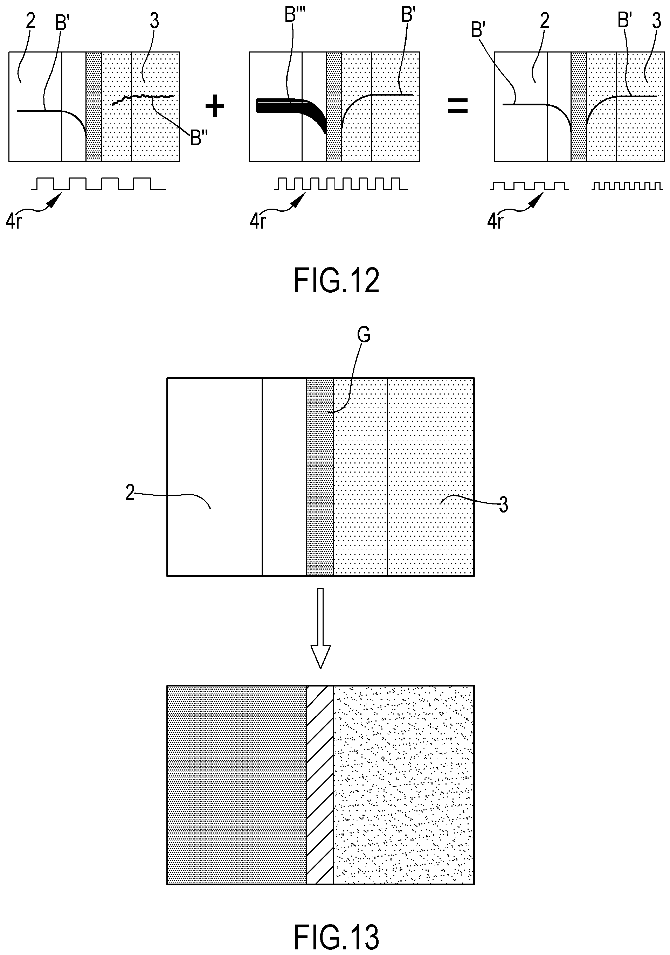

Figure 12 shows the optimization strategy of the optical radiation profiles B', B", B" on the first surface 2 and the second surface 3 when the two surfaces 2, 3 have different optical properties. In particular, Figure 12 clearly shows that the combination of two images, thus two image data IMGd,1 and IMGd,2 which are acquired by the image capturing device 6 and which have optical radiation profiles respectively optimized on the optical properties of the first surface 2 (first image data IMGd,1) and of the second surface 3 (second image data IMGd,2), makes it possible to obtain optical radiation profiles with high sharpness and signal-to-noise ratios comparable to those that would be obtained if the measurement were carried out on a first surface 2 and a second surface 3 adjacent to each other and having the same (or substantially the same) optical properties.

The Applicant observes that, although the optimization of the detection accuracy of the optical radiation profiles of the first and second surfaces 2, 3 could be achieved by adopting strategies aimed at increasing the dynamic range of the image, such as for example high dynamic range imaging (HDRI), the necessary conditions for the use of imaging techniques such as HDRI are the stability in space and the temporal stationarity of the pose of the device. It is logical to assume that these conditions are not sustainable in a portable device operated, for example, by a human operator. An eventual variation of the pose of the device during the acquisition of images of the first and second surfaces 2, 3 at different exposure times, in fact, would invalidate the entire reconstruction of the final image acquired by means of an HDRI technique, with a consequent increase in the uncertainty associated with the measurement of a space and/or an alignment and/or a misalignment angle between a first and a second surface 2, 3 adjacent to each other. Moreover, the use of techniques based on HDRI would require data processing units 9 characterized by high computational power, if the execution time of the algorithms is to be reduced; otherwise, data processing units 9 with low computational capacity could be used, but at the cost of a significant lengthening of the time required to produce significantly longer values of space and/or alignment and/or misalignment angle between the first surface 2 and the second surface 3.

The calibration of the intensity of the optical radiation incident between the first surface 2 and the second surface 3 according to the optical properties of surfaces 2, 3 and the recombination of the two acquired images with optical radiation profiles with different characteristics (this last solution being represented in the right image of figure 12, where it is present the indication of two different modulations for the optical radiation 4r emitted by the source 4) represents an effective alternative, because the acquisition times of the optical radiation profiles on the first surface 2 and on the second surface 3 depend on operations managed at hardware level by the data processing unit 9 and on the acquisition of two consecutive images by the image capturing device 6, under similar conditions of exposure times, and therefore, faster. The increase in speed of the image capture operations and the lowering of the computational burden of the data processing unit 9 are enabling aspects for the use of portable devices in human-operated measurement operations.

Therefore, in a particular embodiment, the profile data L of the first surface 2 is generated based on at least part of the first sequential image data IMGd,1 while the profile data L of the second surface 3 is generated based on at least part of the second sequential image data IMGd,2. Due to this aspect, the optimization of the definition of the profiles of the first surface 2 and the second surface 3 is efficient, since it is not averaged over the first surface 2 and the second surface 3, but is the result of a combination of measurements made with an optical radiation "calibrated" for each of the two surfaces 2, 3. By means of the aforementioned procedure, the data processing unit 9 is thus configured to electronically calculate a value of the space G and/or the alignment F and/or the misalignment angle α between the first surface 2 and the second surface 3 from the profile data L.

The optimization of the optical radiation profiles according to the invention is therefore represented by the possibility of calibrating the intensity of the optical radiation produced by the source 4 on the optical properties of the first and second surfaces 2, 3. This condition is obtained following the identification, by means of semantic segmentation applied to the image acquired by the image capturing device, and according to what is schematically represented in figure 13, of the areas of the image related to:
- the separation zone between the first surface 2 and the second surface 3 (this zone is represented with a dark graphic pattern) and that corresponds in axial terms to the space G existing between the first surface 2 and the second surface 3,
- the surface that is on the left and the surface that is on the right (or alternately up and down if the G-space is horizontally oriented) with respect to the separation zone and/or the imaging point provided by the image capturing device 6.

The process of semantic segmentation of the three areas also allows the elimination of those portions of the optical radiation profile which, by way of example, fall within the separation zone and which, therefore, do not contribute to providing information useful for measuring the space and/or alignment and/or misalignment angle between the first surface 2 and the second surface 3.

As schematically represented in figure 15, the data processing unit 9 is therefore configured to electronically and automatically perform a labelling on the image acquired by the image capturing device 6, which firstly comprises a first sub-step aimed at identifying the separation zone between the first surface 2 and the second surface 3. The said labeling, in particular, takes place on the image data, in particular on the preliminary image data, and even more specifically takes place for each pixel of the preliminary image data IMGd,p.

Once this separation zone has been identified, the data processing unit 9 automatically performs a recognition of the first surface 2 and the second surface 3 and thus also performs an electronic distinction between the first surface 2 and the second surface 3.

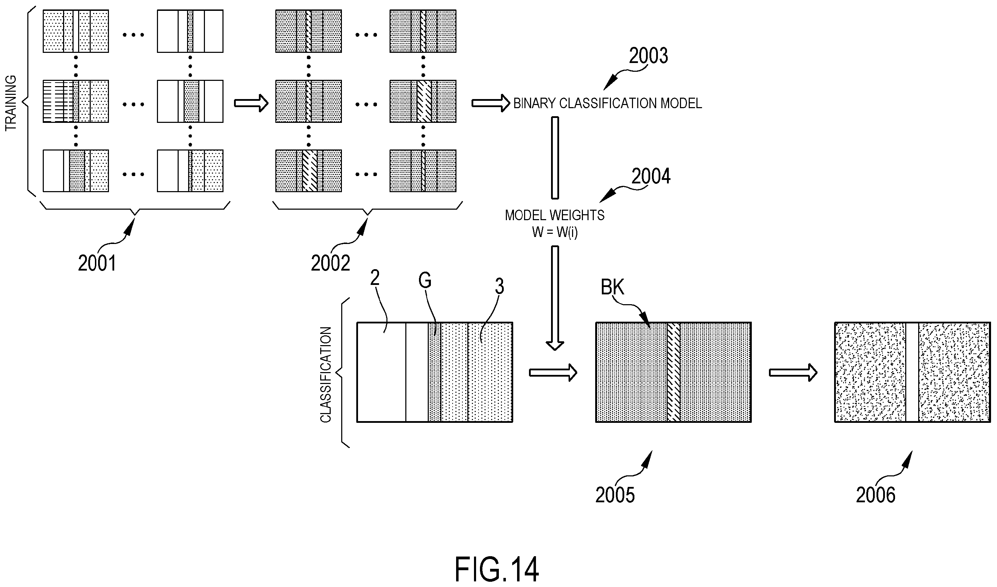

As schematically depicted in Figure 14, the distinction is made by means of a binary classification model based on an artificial intelligence engine, whose classes are represented by the separation zone and the remaining portion of the image, in particular the BK background of the image.

Figure 14 illustrates a schematic representation of an algorithm aimed at determining the distinction between the first surface 2 and the second surface 3. Such an algorithm first includes a training phase 2001 of the artificial intelligence model aimed at identifying a binary classification model 2003 and associated weights 2004. The training phase 2001 of the algorithm results in the production of labeled data 2002 which is employed in the development of the binary classification model 2003.

The algorithm further comprises a classification step aimed at semantically segmenting the image captured by the image capturing device 6. A preferred and non-limiting embodiment of the classification algorithm comprises the use of a convolutional neural network according to the U-NET architecture and employs a combination of the Dice Loss and Focal Loss cost functions. The training dataset consists of annotated images in which the separation zone has been highlighted with a different pattern than the BK background.

The classification model receives as input the image acquired by the image capturing device 6 and provides as output the segmented image in which the separation area and the background BK are highlighted. The spatial relations existing between the first surface 2 and the second surface 3 with respect to the separation area allow to identify on the image a left area and a right area (or alternatively a top area and a bottom area) corresponding respectively to the first surface 2 and to the second surface 3. It is understood that the present invention is in no way limited with respect to the orientation that the separation area between the first surface 2 and the second surface 3 can assume with respect to the image capturing device 6 (for example, an orientation whereby the first surface 2 and the second surface 3 are respectively placed to the left and to the right of the separation area between the first surface 2 and the second surface 3 or an orientation whereby the first surface 2 and the second surface 3 are respectively placed above and below the separation area between the first surface 2 and the second surface 3), being in any case sufficient a condition of adjacency between the first surface 2 and the second surface 3 at the interface between them represented by the separation zone.

The Applicant notes that the operations described herein as being performed on the images, are in fact performed on the image data, in particular the IMGd,p preliminary image data transmitted from the image capturing device 6 to the data processing unit 9.

The identification of the areas corresponding to the left or upper portion and to the right or lower portion, thus corresponding to the first surface 2 and to the second surface 3, allows to perform further processing steps of the image data aimed at allowing a classification of the properties of each adjacent part, such as for example color and/or type of material. Such a classification phase can be conducted, by way of example, by performing multi-class classification algorithms that receive as input the image portions corresponding to the first surface 2 and to the second surface 3, which are then labeled (phase 2006 of figure 14) and which return the type of material associated to each of the two surfaces. In other words, this means that the data processing unit 9 may comprise portions of software code which, when executed, cause a labeling of a first portion of the preliminary image data IMGd,p and a second portion of the preliminary image data IMGd,p and which cause an assignment of a particular type of material to each of the said first and second portions of the preliminary image data IMGd,p.

Such operations allow the intensity of the optical radiation produced by the source 4 to be calibrated to the optical properties of both the first surface 2 and the second surface 3. In a particular and non-limiting form of embodiment, the aforementioned assignment comprises electronic access to a predefined associative archive (look-up-table) and comprises an extraction from said predefined associative archive (look-up-table) of TTL signal frequency values, with which the data processing unit 9 drives the source 4.

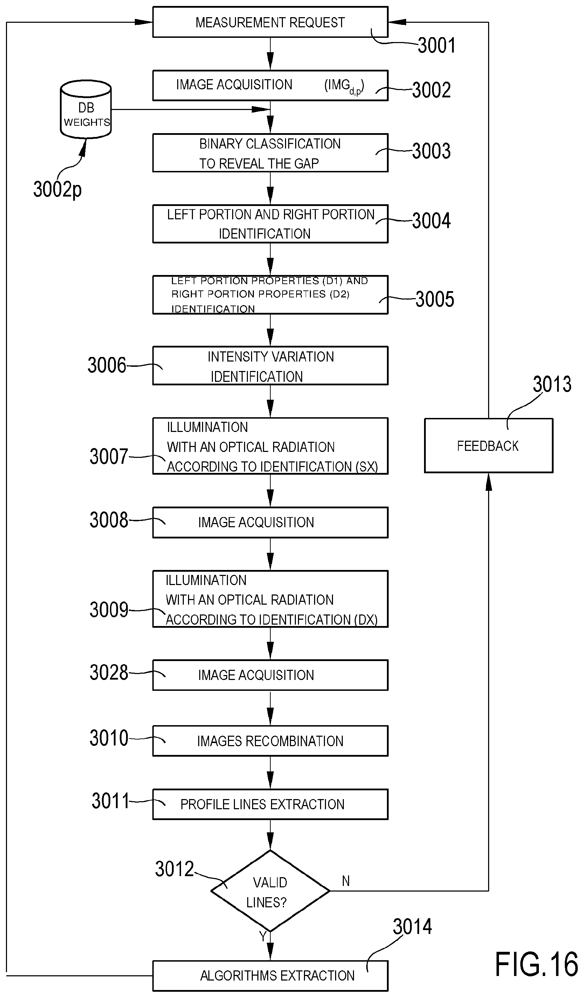

In view of the foregoing, it is therefore clear that according to the present document, a particular method for measuring a gap and/or an alignment and/or a misalignment angle between a first surface 2 and a second surface 3 is described. The method is summarily described with reference to the appended figures, and in particular with reference to Figure 16. The Applicant observes that the method described herein, as well as the configuration of the data processing unit 9 disclosed herein, may be associated with specific portions of software code executed by the data processing unit 9, which retrace the method steps and use configurations described herein.

Upon requesting a measurement (block 3001, Figure 16) of a value of the space G and/or the alignment F and/or the misalignment angle α between the first surface 2 and the second surface 3 from the profile data L, an activation step of the image capturing device 6 is implemented in order to capture an image of a portion of the surface 2 and a portion of the surface 3, as well as the separation zone between them. The step of activating the image capturing device 6 results in an acquisition of preliminary image data IMGd,p by means of the image capturing device 6. This step is schematically represented by block 3002 of figure 16.

The method also described herein comprises a step of operatively connecting the image capturing device 6 to the data processing unit 9, such that the data processing unit 9 receives preliminary image data IMGd,p from the image capturing device 6.

As schematically shown in block 3003 of figure 16, the method described herein comprises a segmentation step, by processing at least part of the preliminary image data IMGd,p, of the image captured by the image capturing device 6, so as to obtain an electronic identification of the separation zone, and consequently an electronic distinction between the first surface 2 and the second surface 3. Preferably, but not limited to, the segmentation takes place by loading weight data (block 3002p, Figure 16) retrieved from the respective database.

The above segmentation allows the identification (block 3004, figure 16), on the IMGd,p image, in particular of a left area and a right area (or alternatively an upper area and a lower area).

In particular, the method described herein includes distinguishing which of the first surface 2 and the second surface 3 is located to the left (or up) relative to the camera point offered by the image capturing device 6 and which of the first surface 2 and the second surface 3 is located to the right (or down) relative to the camera point offered by the image capturing device 6. This distinction substantially corresponds to block 3004 of figure 16 and is an electronic distinction determined by the orientation of the first surface 2 and the second surface 3 with respect to the image capturing device 6.

The optical properties proper to the first surface 2 and the second surface 3 are then identified electronically (block 3005, Figure 16), and from these optical properties the characteristics of the optical radiation which is subsequently radiated towards the first surface 2 and the optical radiation which is subsequently radiated towards the second surface 3 are determined (block 3006).

The first characteristic (i.e., the characteristic associated with the first surface 2) and/or the second characteristic (i.e., the characteristic associated with the second surface 3) are in particular at least one variable characteristic of an optical radiation, preferably a luminous intensity or a wavelength or a polarization or a frequency of variation of the luminous intensity or a power or a waveform or a waveform of the variation of the luminous intensity or a radiation time.

As schematically identified in blocks 3007, 3008, 3009 and 3010 of figure 16, the method described herein further comprises a first step of driving the source 4 intended for the emission of an optical radiation having the first characteristic (block 3007, figure 16). Following the irradiation of the optical radiation, there follows a first receiving step (block 3008, figure 16) of first sequential image data IMGd,1 transmitted by the image capturing device 6, wherein the first sequential image data IMGd,1 corresponds to the optical radiation having the first characteristic.

Preferably but not immediately following the above, there is a second driving phase (block 3009, figure 16) of the source 4 intended for the emission of an optical radiation having the second characteristic. Following the irradiation of the optical radiation, there follows a second receiving step (block 3028, figure 16) of second sequential image data IMGd,2 transmitted by the image capturing device 6, wherein the second sequential image data IMGd,2 corresponds to the optical radiation having the second characteristic.

The Applicant notes that the next step identified by block 3010 in Figure 16 bears "image recombination" since, following receipt of the second sequential image data IMGd,2 transmitted by the image capturing device 6, the data processing unit 9 automatically performs a combination of the first sequential image data IMGd,1 with the second sequential image data IMGd,2 in order to subsequently be able to extract the profile data of the first surface 2 and the second surface 3.

Indeed, the method comprises a step of generating profile data L based on at least part of the first sequential image data IMGd,1 and the second sequential image data IMGd,2. Said step corresponds to block 3011 of figure 16.

The Applicant also notes that the blocks 3010 and 3011, in a preferred form of embodiment, may be reversed in sequence, in particular where the steps of extracting profile data of the first surface 2 and the second surface 3 occur on the basis of at least part of the first sequential image data IMGd,1 and at least part of the second sequential image data IMGd,2 and where the subsequent recombination occurs on the profile data only, so as to reduce the computational burden on the data processing unit 9.

The generation of the profile data is followed by a step of processing the profile data L in order to determine (block 3014, Figure 16) a value of a space G and/or an alignment F and/or a misalignment angle α between the first surface 2 and second surface 3.

In particular, it is noted that in accordance with the specific optical properties of the first surface 2 and the second surface 3, a particular configuration of the data processing unit 9 and therefore a particular form of implementation of the method described herein may comprise a determination, in particular an electronic calculation, of a first exposure time and a second exposure time which are derived from the previously mentioned segmentation. In particular, the data processing unit 9 is configured to set an exposure time of the image capturing device 6 equal to the first exposure time for the purpose of acquiring the first sequential image data IMGd,1 and an exposure time of the image capturing device 6 equal to the second exposure time for the purpose of acquiring the second sequential image data IMGd,2. This makes it possible to reduce the risk of obtaining overexposed or underexposed images due to a difference in, for example, a reflection coefficient of the optical radiation of the first surface 2 with respect to the second surface 3, and thus contributes to improving the accuracy with which the profile L can be determined. The data processing unit 9 is particularly configured to extract from the preliminary image data IMGd,p:
- First property data D1 associated with the first surface 2 and representative of how optically cooperative the first surface 2 is, in particular the reflectance and/or optical reflectance intensity and/or optical scattering and/or color and/or geometric pattern and/or material type and/or roughness of the first surface 2, and
- Second property data D2 associated with said second surface 3 and representative of how optically cooperative the second surface 3 is, in particular of the reflectance and/or optical reflectance intensity and/or optical scattering and/or color and/or geometric pattern and/or material type and/or roughness of the second surface 2.

The data processing unit 9 then automatically derives a predetermined and unambiguous association between the first property data D1 and the first optical radiation characteristic and/or the first exposure time, and between the second property data D2 and the second optical radiation characteristic and/or the second exposure time.

In a particular and non-limiting embodiment, the data processing unit 9 is configured to search, in a pre-defined associative store, for property data equivalent or substantially equivalent to first property data D1 and property data equivalent or substantially equivalent to second property data D2. In an implementation form, the above-mentioned associative store is an electronic associative store integrated within the apparatus 1 described herein. In an alternative form of implementation, the above-mentioned associative archive is an electronic associative archive not integrated within the apparatus 1, but made operationally accessible to the data processing unit 9, which in this case performs a procedure of establishing and maintaining at least temporarily a logical communication channel with said associative archive.

The data processing unit 9 performs an extraction from the associative store of the first optical radiation characteristic and/or the first exposure time, wherein the first optical radiation characteristic and/or the first exposure time are respectively the optical radiation characteristic and the exposure time associated with property data equivalent or substantially equivalent to the first property data D1.

Likewise, the data processing unit 9 performs an extraction from the associative archive of the second optical radiation characteristic and/or the associated second exposure time, wherein the second optical radiation characteristic and/or the second exposure time are respectively the optical radiation characteristic and the exposure time associated with property data equivalent or substantially equivalent to the second property data D2. In other words, the data processing unit 9 goes to electronically search, within the associative archive, for exemplars close to or comparable with those of the first surface 2 and/or the second surface 3. This partially reduces the computational load on the data processing unit 9 that would otherwise occur where complex computational operations have to be performed without the use of an associative archive.

In a preferred but not limiting embodiment, the data processing unit 9 is further configured to detect the position and/or the orientation of the separation zone between the first surface 2 and the second surface 3 and is further configured to perform a comparison of the position and/or the orientation with respective references considered to be representative of suitable operating conditions of the apparatus 1. Thanks to this aspect, it is possible to increase the measurement accuracy of the space G and/or the alignment F and/or the misalignment angle α between the first surface 2 and the second surface 3. In a preferred but not limiting embodiment, there is present a generation of at least one information about the outcome of said comparison.

The Applicant observes that a block 3012 identifying a verification of the presence of a valid profile extraction is present in figure 16. In a form of embodiment, the data processing unit 9, based on the method described herein, performs a verification whether the electronically extracted profile lines (block 3011, Figure 16) are to be considered acceptable. If this verification is unsuccessful, there is a notification step ("feedback", block 3013 figure 16) comprising, for example and not limited to, sending at least one of a visual signal, an audible signal, or a data message, indicative of the fact that the measurement of the space G and/or the alignment F and/or the misalignment angle α between the first surface 2 and the second surface 3 is compromised. In this case, the data processing unit 9 may be configured to automatically perform a new measurement request. In the case where, on the other hand, the profile lines are deemed acceptable, the measurement procedure ends with the provision of the values of the gap G and/or the alignment F and/or the misalignment angle α between the first surface and the second surface 2, 3.

### Effects of the invention

The advantages of the apparatus 1 and the method disclosed herein are clear to the optical radiation of the foregoing description and the figures furnishing said description. In detail, the apparatus 1 and the method advantageously described herein allow to obtain measurements of space G and/or alignment F and/or misalignment angle α between a first surface 2 and a second surface 3 extremely precise and in an almost automated way, without therefore the need for complex interventions by the operator. In particular, the use of the inferential model described herein advantageously allows to increase the signal-to-noise ratio that can be found on the acquired image. This applies both on optically cooperative surfaces and on optically non-cooperative surfaces.

Furthermore, the apparatus 1 and the method subject matter of the present disclosure allow obtaining a semantic segmentation of the image captured by the image capturing device 6 aimed at an advanced, precise and accurate recognition of the area separating the first surface 2 from the second surface 3.

The apparatus 1 and the method subject matter of the present disclosure also enable classification of color and type of material of which the adjacent portions of the first surface 2 and the second surface 3 are formed.

Moreover, the apparatus 1 and the method described herein allow to eliminate from the analysis those optical radiation profiles that should be in the zone of the image classified as an area included between the parts of the first surface 2 and the second surface 3 that are adjacent to each other, and this determines an increase in the reliability in the determination of the values of the space G and/or the alignment F and/or the misalignment angle α between the first surface 2 and the second surface 3.

In addition, the apparatus 1 and the method described herein allow a modulation of the intensity of the optical radiation emitted by the source 4 so as to allow an optimization of the optical radiation profile calibrated to the optical properties of each between the first surface 2 and the second surface 3.

All this therefore reduces the measurement time of the values of the space G and/or the alignment F and/or the misalignment angle α between the first surface 2 and the second surface 3, by replacing the operations of varying a multitude of exposure times (typically in a number greater than two) of the image capturing device 6 with the variation of the intensity of the optical radiation emitted by the light source 4 and reduces the uncertainty associated with the measurement of the above-mentioned values when the measurement involves adjacent parts having different optical properties.

The above allows to provide feedback to the operator on the quality of his measurement position if one of the two adjacent parts is clearly predominant over the other in the acquired image and/or if the separation line between the two adjacent parts is highly inclined in the image with respect to the optical radiation profile investing the first surface 2 and the second surface 3.

Furthermore, the above allows to reduce the uncertainty associated with the measurement of the values of the space G and/or the alignment F and/or the misalignment angle α between the first surface 2 and the second surface 3 if the separation zone is inclined in the image by being able to derive the inclination angle of the separation zone.

In particular, the labeling performed by means of the semantic segmentation of the separation zone with respect to the two left and right (or alternatively upper and lower) zones of the image corresponding to the first surface 2 and to the second surface 3 allows to provide feedback to the operator, by means of the apparatus 1, on the accuracy of the relative positioning of the apparatus 1 with respect to the surfaces 2, 3 on which the measurement of the space G and/or of the alignment F and/or of the misalignment angle α is performed. In this regard, Figure 15 presents three typical measurement conditions:

Figure 15, in the left embodiment, shows an optimal measurement condition, with the separation zone well centered between the image areas corresponding to the first surface 2 and the second surface 3.

Figure 15, in the central embodiment, shows an example of a measurement in which the operator has positioned the apparatus 1 in a spatially off-center position with respect to the separation zone. In particular, said spatially off-center position is translated with respect to a straight line orthogonal to the first surface 2 and/or to the second surface 3 and outside the center of the separation zone.

In such a condition, the space G and/or the alignment F and/or the misalignment angle α between the first surface 2 and second surface 3 could not be determined correctly. However, the detection of an area corresponding to the second surface 3 which is much smaller than the area corresponding to the first surface 2 already from the semantic segmentation step makes it possible to provide an indication to the operator about the need to perform a centring operation, in particular to translate the plane on which the optical axis AC of the image capturing device 6 and the optical propagation axis AL of the optical radiation emitted by the source 4relieve with respect to the separation area between the first surface 2 and the second surface 3. Alternatively, the identification of an area corresponding to the second surface 3 much smaller than the area corresponding to the first surface 2 already starting from the semantic segmentation phase allows to involve, in the determination of the space G and/or of the alignment F and/or of the misalignment angle α compensatory algorithms that allow to effectively compensate for the condition of the off-center apparatus 1 with respect to the separation zone.

Figure 15, **in** the representation on the right, shows an example of a measurement in which the operator has positioned the apparatus 1 in a wrong way with respect to the separation zone. Such a condition would result in an overestimation of the measured G-space value. However, the identification of the separation zone in the semantic segmentation step allows to derive, by means of image processing algorithms, the inclination angle of the apparatus 1 and allows to compensate the measurement at least of the space G according to the inclination angle and/or to provide an indication to the operator about the need to orient the apparatus 1, so as to have the optical radiation profile ideally perpendicular to the axis of symmetry of the separation zone between the first surface 2 and the second surface 3. It is observed that the above-mentioned angle of inclination corresponds to an angle of rotation of the apparatus 1, or equivalently of the image capturing device 6 with respect to a main plane along which the space G is developed. With reference to figure 15, said angle is an angle φ measured in relation to a y-axis forming part of a Cartesian pair of x, y axes on the plane of lay of the first surface 2 and of the second surface 3, said plane developing along a third axis, not represented in the figure and orthogonal to the x-axis and the y-axis.

The above-described invention with reference to particular embodiments depicted in the attached drawing plates fully overcomes the drawbacks complained of in relation to the known technique, in particular to the technical solution of patent application WO2019/167012A1. Both the identification of the separation zone by means of the semantic segmentation technique, the extraction of the profile lines by means of the modulation of the optical radiation, and the determination of the space and/or alignment and/or misalignment angle values by means of the use of the inferential model contribute to the overcoming of said drawbacks.

Indeed, it should be emphasized that semantic segmentation, modulation of optical radiation and the inferential model, while each of these aspects of the invention is already in itself suitable to ensure advantageous technical effects in comparison with the state of the art, operate synergistically with each other, maximizing such advantageous effects. Especially, semantic segmentation, optical radiation modulation and the inferential model effectively cooperate with each other, achieving among others the following advantageous technical effects:
- an increase in the precision and accuracy of space measurement and alignment and misalignment angle;
- an adaptation to different geometric configurations without requiring changes in the algorithm used to extract the space and alignment and misalignment angle values;
- compensation of possible problems with the quality of the acquired image, which can in particular be found in the case of optically uncooperative surfaces;
- an optimization of the optical radiation profiles according to the optical characteristics of the pair of adjacent parts;
- a reduction in measurement time of space and/or alignment and/or misalignment angle;
- an increase in the versatility of use of the space measuring apparatus and/or alignment and/or misalignment angle.

The invention is not limited to the embodiments of the appended figures; therefore, where reference numerals or marks are present in the following claims, such reference numerals or marks are provided solely for the purpose of increasing the intelligibility of the appended claims, and are therefore not limiting. The invention is only limited by the appended claims.

The invention is evidently susceptible of many industria applications, in particular being profitably employed in manufacturing sectors such as, for example, the automotive, household appliance, aeronautical, railway and furniture sectors, for quality controls carried out in production lines and for maintenance and service operations in workshops and construction sites.

## Claims

1. Apparatus (1) for measuring a gap and/or a flushness and/or an angle of misalignment between a first surface (2) and a second surface (3), comprising:
- a source (4) of optical radiation,
- at least one lens associated with said source (4), said lens being configured to generate an optical radiation plane from the optical radiation emitted by said source (4),
- at least one image capturing device (6), configured to capture an image of at least a portion of said first surface (2), of at least a portion of said second surface (3) and of a separation zone between said portions of said first surface (2) and of said second surface (3), the orientation of said image capturing device (6) with respect to said source (4) being such as to enable said image capturing device (6) to capture an image of an optical radiation profile obtained by projection of said optical radiation plane onto said portions of said first surface (2) and of said second surface (3),
- a data processing unit (9) operatively connected to at least said image capturing device (6),
wherein the data processing unit (9) is configured to:
- receive preliminary image data (IMGd,p) from said image capturing device (6),
- perform, by processing at least part of said preliminary image data (IMGd,p), a segmentation of the image captured by said image capturing device (6),
- determine, in accordance with said segmentation, a first characteristic and a second characteristic, said first characteristic and said second characteristic being associated respectively with properties of the first surface (2) and of the second surface (3) inferred through said preliminary image data (IMGd,p),
- drive said source (4) in such a way that said source (4) emits an optical radiation having said first characteristic,
- receive from the image capturing device (6) first sequential image data (IMGd,1) corresponding to optical radiation having said first characteristic,
- drive said source (4) in such a way that said source (4) emits an optical radiation having said second characteristic,
- receive from the image capturing device (6) second sequential image data (IMGd,2) corresponding to optical radiation having said second characteristic,
- generate profile data (L) of said portions of said first surface (2) and of said second surface (3) based on at least part of said first sequential image data (IMGd,1) and on at least part of said second sequential image data (IMGd,2),
- determine a value of a gap (G) and/or a flushness (F) and/or an angle of misalignment (α) between said portions of said first surface (2) and of said second surface (3) from said profile data (L).

2. Apparatus (1) according to claim 1, wherein said optical radiation is in the infrared or visible or ultraviolet domain and wherein said source (4) is a laser light source.

3. Apparatus (1) according to claim 1 or to claim 2, wherein said image capturing device (6) is a camera or comprises at least one camera.

4. Apparatus (1) according to any one of claims 1 to 3, wherein said segmentation contemplates an electronic identification of said separation zone between said portions of said first surface (2) and of said second surface (3), said electronic identification enabling an electronic distinction to be obtained between said portions of said first surface (2) and of said second surface (3) within the image captured by said image capturing device (6).

5. Apparatus (1) according to any one of claims 1 to 3, wherein said segmentation is a semantic segmentation and wherein said semantic segmentation is achieved through the use of neural networks.

6. Apparatus (1) according to any one of claims 1 to 5, wherein said first characteristic and said second characteristic comprise at least one variable characteristic of an optical radiation such as luminous intensity, wavelength, polarization, frequency of variation of the luminous intensity, power, waveform, waveform of the variation of the luminous intensity and irradiation time.

7. Apparatus (1) according to any one of claims 1 to 6, wherein the profile data (L) of the portion of said first surface (2) are generated based on at least part of said first sequential image data (IMGd,1) and wherein the profile data (L) of the portion of said second surface (3) are generated based on at least part of said second sequential image data (IMGd,2).

8. Apparatus (1) according to any one of claims 1 to 7, wherein the data processing unit (9) is further configured to:
- determine, according to said segmentation, a first exposure time and a second exposure time of the image capturing device (6),
- set an exposure time of the image capturing device (6) equal to said first exposure time for the purpose of acquiring said first sequential image data (IMGd,1) and an exposure time of the image capturing device (6) equal to said second exposure time for the purpose of acquiring said second sequential image data (IMGd,2).

9. Apparatus (1) according to any one of claims 1 to 8, wherein said data processing unit (9) is further configured to:
- extract from said preliminary image data (IMGd,p) first property data (D1) associated with said first surface (2) and representative of how optically cooperative said first surface (2) is and second property data (D2) associated with said second surface (3) and representative of how optically cooperative said second surface (3) is,
- derive a predetermined and univocal association between the first property data (D1) and said first characteristic of the optical radiation,
- derive a predetermined and univocal association between the second property data (D2) and said second characteristic of the optical radiation.

10. Apparatus (1) according to any one of claims 1 to 9, wherein the data processing unit (9) is further configured to:
- detect position and/or orientation of said separation zone within the image captured by said image capturing device (6),
- perform a comparison of said position and/or said orientation with respective references considered to be representative of suitable operating conditions of said apparatus (1),
- generate at least one piece of information about the outcome of that comparison.

11. A method for measuring a gap and/or a flushness and/or an angle of misalignment between a first surface (2) and a second surface (3), comprising:
- a step of generating an optical radiation profile on at least a portion of said first surface (2) and on at least a portion of said second surface (3) by projection onto said portions of an optical radiation plane,
- an activation step (1002) of at least one image capturing device (6), said image capturing device (6) being configured to capture an image of at least a portion of said first surface (2), of at least a portion of said second surface (3) and of a separation zone between said portions of said first surface (2) and of said second surface (3),
- an operational connection step between said image capturing device (6) and a data processing unit (9), so as to allow said data processing unit (9) to receive preliminary image data (IMGd,p) from said image capturing device (6),
- a step of segmentation, by processing at least part of said preliminary image data (IMGd,p), of the image captured by said image capturing device (6), so as to make an electronic identification of said separation zone between said portions of said first surface (2) and of said second surface (3), said electronic identification allowing to obtain an electronic distinction between said portions of said first surface (2) and of said second surface (3),
- a step of determining a first characteristic and a second characteristic, said first characteristic and said second characteristic being associated respectively with properties of the first surface (2) and of the second surface (3) inferred through said preliminary image data (IMGd,p),
- a first step of driving a source (4) of optical radiation intended to emit an optical radiation having said first characteristic,
- a first step of receiving first sequential image data (IMGd,1) transmitted by the image capturing device (6), said first sequential image data (IMGd,1) corresponding to the optical radiation having said first characteristic,
- a second step of driving said source (4) of optical radiation intended to emit an optical radiation having said second characteristic,
- a second step of receiving second sequential image data (IMGd,2) transmitted by the image capturing device (6), said second sequential image data (IMGd,2) corresponding to the optical radiation having said second characteristic,
- a step of generating profile data (L) based on at least part of said first sequential image data (IMGd,1) and on at least part of said second sequential image data (IMGd,2),
- a step of processing said profile data (L) to determine a value of a gap (G) and/or a flushness (F) and/or an angle of misalignment (α) between said portions of said first surface (2) and of said second surface (3).

12. Method according to claim 11, wherein said segmenting step includes semantic segmentation and wherein said semantic segmentation is achieved through the use of neural networks.

13. Method according to claim 11 or to claim 12, further comprising:
- a step of extracting from said preliminary image data (IMGd,p) first property data (D1) associated with said first surface (2) and representative of how optically cooperative said first surface (2) is, and second property data (D2) associated with said second surface (3) and representative of how optically cooperative said second surface (3) is,
- a step of investigating a predetermined archive in order to derive the first characteristic and the second characteristic, the first characteristic being the characteristic of the optical radiation associated with property data equivalent or substantially equivalent to said first property data (D1), the second characteristic being the characteristic of the optical radiation associated with property data equivalent or substantially equivalent to said second property data (D2),
wherein said first property data (D1) are representative of the reflectance and/or of the optical reflectance intensity and/or of the optical scattering and/or of the color and/or of the geometric pattern and/or of the material type and/or of the roughness of said first surface (2) and wherein said second property data (D2) are representative of the reflectance and/or of the optical reflectance intensity and/or of the optical scattering and/or of the color and/or of the geometric pattern and/or of the material type and/or of the roughness of said second surface (3).

14. A method according to any one of claims 11 to 13, wherein the value of the gap (G) and/or of the flushness (F) and/or of the misalignment angle (α) between said portions of said first surface and of said second surface (2, 3) is determined by using an inferential model.

15. A method according to any one of claims 11 to 13, wherein the value of the gap (G) and/or of the flushness (F) and/or of the misalignment angle (α) between said portions of said first surface and said second surface (2, 3) is determined by using an extraction algorithm of geometric information.

## Patentansprüche

1. **Vorrichtung** (1) zum Messen eines Spalts und/oder eines Bündigkeitsmaßes und/oder eines Winkels der Fehlstellung zwischen einer ersten Oberfläche (2) und einer zweiten Oberfläche (3), umfassend:
• eine Quelle (4) optischer Strahlung,
• mindestens eine Linse, die der Quelle (4) zugeordnet ist, wobei die Linse dazu ausgelegt ist, aus der von der Quelle (4) emittierten optischen Strahlung eine Ebene optischer Strahlung zu erzeugen,
• mindestens eine Bilderfassungseinrichtung (6), die dazu ausgelegt ist, ein Bild von mindestens einem Abschnitt der ersten Oberfläche (2), von mindestens einem Abschnitt der zweiten Oberfläche (3) und von einer Trennzone zwischen diesen Abschnitten der ersten Oberfläche (2) und der zweiten Oberfläche (3) zu erfassen, wobei die Ausrichtung der Bilderfassungseinrichtung (6) relativ zu der Quelle (4) derart ist, dass die Bilderfassungseinrichtung (6) ein Bild eines Profils optischer Strahlung erfassen kann, das durch Projektion der Ebene optischer Strahlung auf diese Abschnitte der ersten Oberfläche (2) und der zweiten Oberfläche (3) erhalten wird,
• eine Datenverarbeitungseinheit (9), die wenigstens mit der Bilderfassungseinrichtung (6) operativ verbunden ist, wobei die Datenverarbeitungseinheit dazu ausgelegt ist:
∘ vorläufige Bilddaten (IMGd,p) von der Bilderfassungseinrichtung (6) zu empfangen,
∘ durch Verarbeitung wenigstens eines Teils der vorläufigen Bilddaten (IMGd,p) eine Segmentierung des von der Bilderfassungseinrichtung (6) erfassten Bildes durchzuführen,
∘ entsprechend dieser Segmentierung eine erste Charakteristik und eine zweite Charakteristik zu bestimmen, wobei die erste Charakteristik und die zweite Charakteristik jeweils Eigenschaften der ersten Oberfläche (2) bzw. der zweiten Oberfläche (3) zugeordnet sind, die aus den vorläufigen Bilddaten (IMGd,p) abgeleitet werden,
∘ die Quelle (4) derart anzusteuern, dass die Quelle (4) eine optische Strahlung mit der ersten Charakteristik emittiert,
∘ von der Bilderfassungseinrichtung (6) erste sequentielle Bilddaten (IMGd,1) zu empfangen, die der optischen Strahlung mit der ersten Charakteristik entsprechen,
∘ die Quelle (4) derart anzusteuern, dass die Quelle (4) eine optische Strahlung mit der zweiten Charakteristik emittiert,
∘ von der Bilderfassungseinrichtung (6) zweite sequentielle Bilddaten (IMGd,2) zu empfangen, die der optischen Strahlung mit der zweiten Charakteristik entsprechen,
∘ Profildaten (L) dieser Abschnitte der ersten Oberfläche (2) und der zweiten Oberfläche (3) auf der Grundlage wenigstens eines Teils der ersten sequentiellen Bilddaten (IMGd,1) und wenigstens eines Teils der zweiten sequentiellen Bilddaten (IMGd,2) zu erzeugen,
∘ aus den Profildaten (L) einen Wert eines Spalts (G) und/oder eines Bündigkeitsmaßes (F) und/oder eines Winkels der Fehlstellung (a) zwischen diesen Abschnitten der ersten Oberfläche (2) und der zweiten Oberfläche (3) zu bestimmen.

2. Vorrichtung (1) nach Anspruch 1, wobei die optische Strahlung im infraroten, sichtbaren oder ultravioletten Bereich liegt und wobei die Quelle (4) eine Laserlichtquelle ist.

3. Vorrichtung (1) nach Anspruch 1 oder 2, wobei die Bilderfassungseinrichtung (6) eine Kamera ist oder mindestens eine Kamera umfasst.

4. Vorrichtung (1) nach einem der Ansprüche 1 bis 3, wobei die Segmentierung eine elektronische Identifizierung der Trennzone zwischen diesen Abschnitten der ersten Oberfläche (2) und der zweiten Oberfläche (3) umfasst, wobei diese elektronische Identifizierung eine elektronische Unterscheidung zwischen diesen Abschnitten der ersten Oberfläche (2) und der zweiten Oberfläche (3) innerhalb des von der Bilderfassungseinrichtung (6) erfassten Bildes ermöglicht.

5. Vorrichtung (1) nach einem der Ansprüche 1 bis 3, wobei die Segmentierung eine semantische Segmentierung ist und wobei diese semantische Segmentierung durch den Einsatz neuronaler Netze erreicht wird.

6. Vorrichtung (1) nach einem der Ansprüche 1 bis 5, wobei die erste Charakteristik und die zweite Charakteristik mindestens eine veränderliche Charakteristik einer optischen Strahlung umfassen, wie Lichtintensität, Wellenlänge, Polarisation, Frequenz der Änderung der Lichtintensität, Leistung, Wellenform, Wellenform der Änderung der Lichtintensität und Bestrahlungszeit.

7. Vorrichtung (1) nach einem der Ansprüche 1 bis 6, wobei die Profildaten (L) des Abschnitts der ersten Oberfläche (2) auf der Grundlage wenigstens eines Teils der ersten sequentiellen Bilddaten (IMGd,1) erzeugt werden und wobei die Profildaten (L) des Abschnitts der zweiten Oberfläche (3) auf der Grundlage wenigstens eines Teils der zweiten sequentiellen Bilddaten (IMGd,2) erzeugt werden.

8. Vorrichtung (1) nach einem der Ansprüche 1 bis 7, wobei die Datenverarbeitungseinheit (9) ferner dazu ausgelegt ist:
• entsprechend der Segmentierung eine erste Belichtungszeit und eine zweite Belichtungszeit der Bilderfassungseinrichtung (6) zu bestimmen,
• eine Belichtungszeit der Bilderfassungseinrichtung (6), die der ersten Belichtungszeit entspricht, zum Zweck des Erfassens der ersten sequentiellen Bilddaten (IMGd,1) einzustellen und eine Belichtungszeit der Bilderfassungseinrichtung (6), die der zweiten Belichtungszeit entspricht, zum Zweck des Erfassens der zweiten sequentiellen Bilddaten (IMGd,2) einzustellen.

9. Vorrichtung (1) nach einem der Ansprüche 1 bis 8, wobei die Datenverarbeitungseinheit (9) ferner dazu ausgelegt ist:
• aus den vorläufigen Bilddaten (IMGd,p) erste Eigenschaftsdaten (D1), die der ersten Oberfläche (2) zugeordnet sind und repräsentativ dafür sind, inwieweit die erste Oberfläche (2) optisch kooperativ ist, sowie zweite Eigenschaftsdaten (D2), die der zweiten Oberfläche (3) zugeordnet sind und repräsentativ dafür sind, inwieweit die zweite Oberfläche (3) optisch kooperativ ist, zu extrahieren,
• eine vorbestimmte und eindeutige Zuordnung zwischen den ersten Eigenschaftsdaten (D1) und der ersten Charakteristik der optischen Strahlung abzuleiten,
• eine vorbestimmte und eindeutige Zuordnung zwischen den zweiten Eigenschaftsdaten (D2) und der zweiten Charakteristik der optischen Strahlung abzuleiten.

10. Vorrichtung (1) nach einem der Ansprüche 1 bis 9, wobei die Datenverarbeitungseinheit (9) ferner dazu ausgelegt ist:
• Position und/oder Orientierung der Trennzone innerhalb des von der Bilderfassungseinrichtung (6) erfassten Bildes zu detektieren,
• diese Position und/oder diese Orientierung mit entsprechenden Referenzen zu vergleichen, die als repräsentativ für geeignete Betriebsbedingungen der Vorrichtung (1) angesehen werden,
• mindestens eine Information über das Ergebnis dieses Vergleichs zu erzeugen.

11. Verfahren zum Messen eines Spalts und/oder eines Bündigkeitsmaßes und/oder eines Winkels der Fehlstellung zwischen einer ersten Oberfläche (2) und einer zweiten Oberfläche (3), umfassend:
• einen Schritt des Erzeugens eines Profils optischer Strahlung auf wenigstens einem Abschnitt der ersten Oberfläche (2) und auf wenigstens einem Abschnitt der zweiten Oberfläche (3) durch Projektion einer Ebene optischer Strahlung auf diese Abschnitte,
• einen Aktivierungsschritt (1002) von mindestens einer Bilderfassungseinrichtung (6), wobei die Bilderfassungseinrichtung (6) dazu ausgelegt ist, ein Bild von mindestens einem Abschnitt der ersten Oberfläche (2), von mindestens einem Abschnitt der zweiten Oberfläche (3) und von einer Trennzone zwischen diesen Abschnitten der ersten Oberfläche (2) und der zweiten Oberfläche (3) zu erfassen,
• einen Schritt der operativen Verbindung zwischen der Bilderfassungseinrichtung (6) und einer Datenverarbeitungseinheit (9), sodass die Datenverarbeitungseinheit (9) vorläufige Bilddaten (IMGd,p) von der Bilderfassungseinrichtung (6) empfangen kann,
• einen Schritt der Segmentierung des von der Bilderfassungseinrichtung (6) erfassten Bildes durch Verarbeitung wenigstens eines Teils der vorläufigen Bilddaten (IMGd,p), um eine elektronische Identifizierung der Trennzone zwischen diesen Abschnitten der ersten Oberfläche (2) und der zweiten Oberfläche (3) vorzunehmen, wobei diese elektronische Identifizierung das Erhalten einer elektronischen Unterscheidung zwischen diesen Abschnitten der ersten Oberfläche (2) und der zweiten Oberfläche (3) ermöglicht,
• einen Schritt des Bestimmens einer ersten Charakteristik und einer zweiten Charakteristik, wobei die erste Charakteristik und die zweite Charakteristik jeweils Eigenschaften der ersten Oberfläche (2) bzw. der zweiten Oberfläche (3) zugeordnet sind, die aus den vorläufigen Bilddaten (IMGd,p) abgeleitet werden,
• einen ersten Schritt des Ansteuerns einer Quelle (4) optischer Strahlung, die dazu bestimmt ist, eine optische Strahlung mit der ersten Charakteristik zu emittieren,
• einen ersten Schritt des Empfangens erster sequentieller Bilddaten (IMGd,1), die von der Bilderfassungseinrichtung (6) übertragen werden, wobei diese ersten sequentiellen Bilddaten (IMGd,1) der optischen Strahlung mit der ersten Charakteristik entsprechen,
• einen zweiten Schritt des Ansteuerns der Quelle (4) optischer Strahlung, die dazu bestimmt ist, eine optische Strahlung mit der zweiten Charakteristik zu emittieren,
• einen zweiten Schritt des Empfangens zweiter sequentieller Bilddaten (IMGd,2), die von der Bilderfassungseinrichtung (6) übertragen werden, wobei diese zweiten sequentiellen Bilddaten (IMGd,2) der optischen Strahlung mit der zweiten Charakteristik entsprechen,
• einen Schritt des Erzeugens von Profildaten (L) auf der Grundlage wenigstens eines Teils der ersten sequentiellen Bilddaten (IMGd,1) und wenigstens eines Teils der zweiten sequentiellen Bilddaten (IMGd,2),
• einen Schritt der Verarbeitung dieser Profildaten (L), um einen Wert eines Spalts (G) und/oder eines Bündigkeitsmaßes (F) und/oder eines Winkels der Fehlstellung (a) zwischen diesen Abschnitten der ersten Oberfläche (2) und der zweiten Oberfläche (3) zu bestimmen.

12. Verfahren nach Anspruch 11, wobei der Segmentierungsschritt eine semantische Segmentierung umfasst und wobei diese semantische Segmentierung durch den Einsatz neuronaler Netze erreicht wird.

13. Verfahren nach Anspruch 11 oder 12, ferner umfassend:
• einen Schritt des Extrahierens aus den vorläufigen Bilddaten (IMGd,p) erster Eigenschaftsdaten (D1), die der ersten Oberfläche (2) zugeordnet sind und repräsentativ dafür sind, inwieweit die erste Oberfläche (2) optisch kooperativ ist, sowie zweiter Eigenschaftsdaten (D2), die der zweiten Oberfläche (3) zugeordnet sind und repräsentativ dafür sind, inwieweit die zweite Oberfläche (3) optisch kooperativ ist,
• einen Schritt des Untersuchens eines vorbestimmten Archivs, um die erste Charakteristik und die zweite Charakteristik abzuleiten, wobei die erste Charakteristik die Charakteristik der optischen Strahlung ist, die Eigenschaftsdaten zugeordnet ist, die den ersten Eigenschaftsdaten (D1) entsprechen oder diesen im Wesentlichen entsprechen, und die zweite Charakteristik die Charakteristik der optischen Strahlung ist, die Eigenschaftsdaten zugeordnet ist, die den zweiten Eigenschaftsdaten (D2) entsprechen oder diesen im Wesentlichen entsprechen, wobei die ersten Eigenschaftsdaten (D1) repräsentativ sind für das Reflexionsvermögen und/oder die optische Reflexionsintensität und/oder die optische Streuung und/oder die Farbe und/oder das geometrische Muster und/oder die Materialart und/oder die Rauheit der ersten Oberfläche (2), und wobei die zweiten Eigenschaftsdaten (D2) repräsentativ sind für das Reflexionsvermögen und/oder die optische Reflexionsintensität und/oder die optische Streuung und/oder die Farbe und/oder das geometrische Muster und/oder die Materialart und/oder die Rauheit der zweiten Oberfläche (3).

14. Verfahren nach einem der Ansprüche 11 bis 13, wobei der Wert des Spalts (G) und/oder des Bündigkeitsmaßes (F) und/oder des Fehlstellungswinkels (a) zwischen diesen Abschnitten der ersten Oberfläche und der zweiten Oberfläche (2, 3) unter Verwendung eines inferenziellen Modells bestimmt wird.

15. Verfahren nach einem der Ansprüche 11 bis 13, wobei der Wert des Spalts (G) und/oder des Bündigkeitsmaßes (F) und/oder des Fehlstellungswinkels (a) zwischen diesen Abschnitten der ersten Oberfläche und der zweiten Oberfläche (2, 3) unter Verwendung eines Algorithmus zur Extraktion geometrischer Informationen bestimmt wird.

## Revendications

1. **Dispositif** (1) pour mesurer un jeu et/ou un affleurement et/ou un angle de désalignement entre une première surface (2) et une deuxième surface (3), comprenant :
• une source (4) de rayonnement optique,
• au moins une lentille associée à ladite source (4), ladite lentille étant configurée pour générer un plan de rayonnement optique à partir du rayonnement optique émis par ladite source (4),
• au moins un dispositif de capture d'image (6), configuré pour capturer une image d'au moins une partie de ladite première surface (2), d'au moins une partie de ladite deuxième surface (3) et d'une zone de séparation entre lesdites parties de ladite première surface (2) et de ladite deuxième surface (3), l'orientation dudit dispositif de capture d'image (6) par rapport à ladite source (4) étant telle qu'elle permet audit dispositif de capture d'image (6) de capturer une image d'un profil de rayonnement optique obtenu par projection dudit plan de rayonnement optique sur lesdites parties de ladite première surface (2) et de ladite deuxième surface (3),
• une unité de traitement de données (9) reliée opérationnellement au moins audit dispositif de capture d'image (6), ladite unité de traitement de données (9) étant configurée pour:
∘ recevoir des données d'image préliminaires (IMGd,p) provenant dudit dispositif de capture d'image (6),
∘ effectuer, par traitement d'au moins une partie desdites données d'image préliminaires (IMGd,p), une segmentation de l'image capturée par ledit dispositif de capture d'image (6),
∘ déterminer, conformément à ladite segmentation, une première caractéristique et une deuxième caractéristique, ladite première caractéristique et ladite deuxième caractéristique étant associées respectivement à des propriétés de la première surface (2) et de la deuxième surface (3) déduites desdites données d'image préliminaires (IMGd,p),
∘ piloter ladite source (4) de manière à ce que ladite source (4) émette un rayonnement optique ayant ladite première caractéristique,
∘ recevoir du dispositif de capture d'image (6) des premières données d'image séquentielles (IMGd,1) correspondant à un rayonnement optique ayant ladite première caractéristique,
∘ piloter ladite source (4) de manière à ce que ladite source (4) émette un rayonnement optique ayant ladite deuxième caractéristique,
∘ recevoir du dispositif de capture d'image (6) des deuxièmes données d'image séquentielles (IMGd,2) correspondant à un rayonnement optique ayant ladite deuxième caractéristique,
∘ générer des données de profil (L) desdites parties de ladite première surface (2) et de ladite deuxième surface (3) sur la base d'au moins une partie desdites premières données d'image séquentielles (IMGd,1) et d'au moins une partie desdites deuxièmes données d'image séquentielles (IMGd,2),
∘ **déterminer** une valeur d'un jeu (G) et/ou d'un affleurement (F) et/ou d'un angle de désalignement (a) entre lesdites parties de ladite première surface (2) et de ladite deuxième surface (3) à partir desdites données de profil (L).

2. Dispositif (1) selon la revendication 1, dans lequel ledit rayonnement optique se situe dans le domaine infrarouge, visible ou ultraviolet et dans lequel ladite source (4) est une source lumineuse laser.

3. Dispositif (1) selon la revendication 1 ou 2, dans lequel ledit dispositif de capture d'image (6) est une caméra ou comprend au moins une caméra.

4. Dispositif (1) selon l'une quelconque des revendications 1 à 3, dans lequel ladite segmentation prévoit une identification électronique de ladite zone de séparation entre lesdites parties de ladite première surface (2) et de ladite deuxième surface (3), ladite identification électronique permettant d'obtenir une distinction électronique entre lesdites parties au sein de l'image capturée.

5. Dispositif (1) selon l'une quelconque des revendications 1 à 3, dans lequel ladite segmentation est une segmentation sémantique et est réalisée à l'aide de réseaux neuronaux.

6. Dispositif (1) selon l'une quelconque des revendications 1 à 5, dans lequel ladite première caractéristique et ladite deuxième caractéristique comprennent au moins une caractéristique variable du rayonnement optique telle que l'intensité lumineuse, la longueur d'onde, la polarisation, la fréquence de variation de l'intensité lumineuse, la puissance, la forme d'onde, la forme d'onde de variation de l'intensité lumineuse et le temps d'irradiation.

7. Dispositif (1) selon l'une quelconque des revendications 1 à 6, dans lequel les données de profil (L) de la portion de ladite première surface (2) sont générées sur la base d'au moins une partie des premières données d'image séquentielles (IMGd,1) et les données de profil (L) de la portion de ladite deuxième surface (3) sont générées sur la base d'au moins une partie des deuxièmes données d'image séquentielles (IMGd,2).

8. Dispositif (1) selon l'une quelconque des revendications 1 à **7,** dans lequel l'unité de traitement de données (9) est en outre configurée pour :
• déterminer, selon ladite segmentation, un premier temps d'exposition et un deuxième temps d'exposition du dispositif de capture d'image (6),
• régler un temps d'exposition du dispositif de capture d'image (6) égal audit premier temps d'exposition pour l'acquisition desdites premières données d'image séquentielles (IMGd,1) et un temps d'exposition égal audit deuxième temps d'exposition pour l'acquisition desdites deuxièmes données d'image séquentielles (IMGd,2).

9. Dispositif (1) selon l'une quelconque des revendications 1 à 8, dans lequel l'unité de traitement de données (9) est en outre configurée pour :
• extraire desdites données d'image préliminaires (IMGd,p) des premières données de propriété (D1) associées à ladite première surface (2) et représentatives de son comportement optique, ainsi que des deuxièmes données de propriété (D2) associées à ladite deuxième surface (3) et représentatives de son comportement optique,
• établir une association prédéterminée et univoque entre les premières données de propriété (D1) et ladite première caractéristique du rayonnement optique,
• établir une association prédéterminée et univoque entre les deuxièmes données de propriété (D2) et ladite deuxième caractéristique du rayonnement optique.

10. Dispositif (1) selon l'une quelconque des revendications 1 à 9, dans lequel l'unité de traitement de données (9) est en outre configurée pour :
• détecter la position et/ou l'orientation de ladite zone de séparation dans l'image capturée,
• comparer ladite position et/ou orientation à des références représentatives de conditions de fonctionnement appropriées du dispositif (1),
• générer au moins une information relative au résultat de cette comparaison.

11. Procédé pour mesurer un jeu et/ou un affleurement et/ou un angle de désalignement entre une première surface (2) et une deuxième surface (3), comprenant :
• une étape de génération d'un profil de rayonnement optique sur au moins une partie desdites surfaces par projection d'un plan de rayonnement optique,
• une étape d'activation (1002) d'au moins un dispositif de capture d'image (6),
• une étape de connexion opérationnelle entre le dispositif de capture d'image (6) et une unité de traitement de données (9),
• une étape de segmentation permettant l'identification électronique de la zone de séparation,
• une étape de détermination d'une première et d'une deuxième caractéristique,
• une première étape de pilotage de la source (4),
• une première étape de réception de données d'image séquentielles (IMGd, 1),
• une deuxième étape de pilotage de la source (4),
• une deuxième étape de réception de données d'image séquentielles (IMGd,2),
• une étape de génération de données de profil (L),
• une étape de traitement des données de profil (L) pour déterminer un jeu (G) et/ou un affleurement (F) et/ou un angle de désalignement (a).

12. Procédé selon la revendication 11, dans lequel la segmentation est une segmentation sémantique réalisée à l'aide de réseaux neuronaux.

13. Procédé selon la revendication 11 ou 12, comprenant en outre :
• une étape d'extraction de données de propriété (D1, D2),
• une étape d'interrogation d'une archive prédéterminée pour déterminer les caractéristiques du rayonnement optique correspondantes.

14. Procédé selon l'une quelconque des revendications 11 à 13, dans lequel la valeur du jeu (G), de l'affleurement (F) et/ou de l'angle de désalignement (a) est déterminée à l'aide d'un modèle inférentiel.

15. Procédé selon l'une quelconque des revendications 11 à 13, dans lequel ladite valeur est déterminée à l'aide d'un algorithme d'extraction d'informations géométriques.
